(19) Europäisches Patentamt
European Patent Office
Office européen des brevets

(11) **EP 4 108 437 B1**

(12) **EUROPEAN PATENT SPECIFICATION**

(45) Date of publication and mention of the grant of the patent:
**17.04.2024 Bulletin 2024/16**

(21) Application number: **21181470.2**

(22) Date of filing: **24.06.2021**

(51) International Patent Classification (IPC):
***B29D 7/01*** *(2006.01)* ***C08J 5/18*** *(2006.01)*
***C08F 210/16*** *(2006.01)* ***C08F 4/659*** *(2006.01)*
***B32B 25/00*** *(2006.01)* ***B32B 7/04*** *(2019.01)*
***C08L 23/08*** *(2006.01)*

(52) Cooperative Patent Classification (CPC):
(C-Sets available)
**C08F 210/16; C08F 4/65912; C08F 4/65916; C08J 5/18; C08L 23/0815;** B29D 7/01; C08F 2420/07; C08J 2323/08; C08L 2314/06

(Cont.)

(54) **POLYETHYLENE COPOLYMER WITH IMPROVED SEALING PERFORMANCE**
POLYETHYLENCOPOLYMER MIT VERBESSERTER ABDICHTUNGSLEISTUNG
COPOLYMÈRE DE POLYÉTHYLÈNE À PERFORMANCE D’ÉTANCHÉITÉ AMÉLIORÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**28.12.2022 Bulletin 2022/52**

(73) Proprietor: **Borealis AG**
**1020 Vienna (AT)**

(72) Inventors:
- **POMAKHINA, Elena**
  **4021 Linz (AT)**
- **SUMERIN, Victor**
  **06101 Porvoo (FI)**
- **AHO, Jani**
  **06101 Porvoo (FI)**

(74) Representative: **TBK**
**Bavariaring 4-6**
**80336 München (DE)**

(56) References cited:
**WO-A1-2016/083208** **WO-A1-2021/013552**
**WO-A1-2021/191018** **US-A1- 2014 194 277**

EP 4 108 437 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 210/16, C08F 2/001;**
**C08F 210/16, C08F 4/6492;**
**C08F 210/16, C08F 4/65927;**
**C08L 23/0815, C08L 23/0815, C08L 23/0815;**
C08F 210/16, C08F 210/08, C08F 2500/12;
C08F 210/16, C08F 210/08, C08F 2500/12, C08F 2500/27;
C08F 210/16, C08F 210/14, C08F 210/08, C08F 2500/12, C08F 2500/27, C08F 2500/26, C08F 2500/05, C08F 2500/30, C08F 2500/31;
C08F 210/16, C08F 210/14, C08F 2500/12, C08F 2500/27, C08F 2500/08

## Description

The present invention relates to a metallocene-catalysed multimodal polyethylene copolymer (P), to a process for its production and the use of the multimodal polyethylene copolymer (P) in film applications.

Unimodal polyethylene (PE) polymers, for instance SSC products, are usually used for film applications. Unimodal PE polymers have for instance good optical properties, like low haze, but for instance, the melt processing of such polymers is not satisfactory in production point of view and may cause quality problems of the final product as well. Multimodal PE polymers with two or more different polymer components are better to process, but e.g. melt homogenisation of the multimodal PE may be problematic resulting to inhomogeneous final product evidenced e.g. with high gel content of the final product.

Multimodal PE polymers are suitable for many applications. For instance multimodal PE polymers are applicable in areas where sealing properties play an important role, like in the packing industry.

Heat sealing is the predominant method of manufacturing flexible and semi-rigid packages. An important indication of good sealing performance is *inter alia* a low seal initiation temperature, which is needed to support high speed on packaging machines.

By operating at lower temperature there is the benefit that the article to be sealed is not exposed to high temperatures, which is especially beneficial when temperature sensitive goods are to be packed. There are also economic advantages, since lower temperatures are of course cheaper to generate and maintain.

Several multimodal PE polymers have been described in the past.

WO 2021009189, WO 2021009190 and WO 2021009191 of Borealis disclose a process for preparing multimodal PE polymers in two loop reactors and one gas phase reactor.

The polymers produced in the Examples have a total density of 938 or 939 kg/$m^3$. The $MFR_2$ (190°C, 2.16 kg, ISO 1133) of the polymer components produced in the first loop is 22 g/10 min. Film properties, like sealing initiation temperature (SIT) are not mentioned at all.

Also WO 2021009192 discloses such a process. The polymer produced in the Examples has an even higher density of 951 kg/$m^3$. The $MFR_2$ (190°C, 2.16 kg, ISO 1133) of the polymer component produced in the first loop is 32 g/10 min. Film properties, like sealing initiation temperature (SIT) are not mentioned at all.

WO 2021/013552 A1 relates to a polyethylene composition comprising a base resin, wherein the base resin comprises (A) a first ethylene-1-butene copolymer fraction (A) having a 1-butene content of from 0.5 wt% to 7.5 wt%, based on the total weight amount of monomer units in the first ethylene-1-butene copolymer fraction (A), and a melt flow rate $MFR_2$ in the range of from 1.0 to less than 50.0 g/10 min, determined according to ISO 1133 at a temperature of 190°C and a load of 2.16 kg; and (B) a second ethylene-1-butene copolymer fraction having a higher 1-butene content as the first ethylene-1-butene copolymer fraction (B); wherein the base resin is polymerized in the presence of a single site catalyst system and has a density of from 913.0 to 920.0 kg/$m^3$ and a 1-butene content of from 8.0 to 13.0 wt%, based on the total weight amount of monomer units in the base resin, a process for preparing said polyethylene composition, an article comprising said polyethylene composition and the use of said polyethylene composition for the production of an article. WO 2021/191018 A1 (Art. 54(3) EPC) relates to a polymer composition, to the use of the polymer composition in film applications and to a film comprising the polymer composition. WO 2016/083208 A1 relates to a polymer composition, to the use of the polymer composition in film applications and to a film comprising the polymer composition. US 2014/194277 A1 relates to a polyethylene-based resin composition which comprises from 41 to 99 wt % of (A) an ethylene-based polymer satisfying specific conditions and from 1 to 59 wt % of (B) an ethylene-based polymer satisfying specific conditions, wherein MFR of the composition as a whole is from 0.05 to 50 g/10 min and the density is from 0.910 to 0.960 g/$cm^3$.

There is a continuous need to find multimodal PE polymers with different property balances for providing tailored solutions to meet the increasing demands of the end application producers e.g. for reducing the production costs while maintaining or even improving the end product properties. Tailored polymer solutions are also needed to meet the requirements of continuously developing equipment technology in the end application field.

Therefore, there is a need in the art for providing a material that provides especially low sealing initiation temperature. In addition, good mechanical properties, especially dart drop (impact strength) and tensile modulus are advantageous.

The present invention is based on the finding that the above object can be achieved by a metallocene-catalysed multimodal polyethylene copolymer (P), consisting of an ethylene-1-butene polymer component (A) combined with a specific amount of an ethylene-1-hexene polymer component (B) having a high amount of 1-hexene comonomer units. The resulting multimodal polyethylene copolymers (P) have a sealing initiation temperature of equal to or lower than 75°C.

In addition these copolymers (P) have a high impact strength in combination with good tensile modulus.

The present invention is furthermore related to a method for prediction of the sealing initiation temperature (SIT), and in addition also for prediction of the dart drop impact strength (DDI) as well as for the tensile modulus in machine direction (TM(MD)).

For each polymerization for producing a multimodal polyethylene copolymer (P) with a specific set of polymer properties, like SIT, DDI and/or TM, the polymerization conditions normally need to be determined experimentally.

Most of the final properties of PE copolymers and terpolymers are driven by molecular weight and comonomer(s) content. For unimodal PE copolymers it is usually quite straightforward to tailor final properties, since limited amount of polymer composition parameters can be varied. However, in case of multimodal polymers, the composition of each component and the ratio of the components create so many independent variables, that it would require to conduct an enormous amount of experiments in order to check all possible combinations. For example, in case of a bimodal polymer such independent variables influencing the final material property can be MFR (or Mw, or other Mw related) of component A, comonomer content (or density, crystallinity, or other comonomer insertion related parameters) of the component A, MFR (or Mw, or other Mw related) of the component B, comonomer content (or density, crystallinity, or other comonomer insertion related parameters) of the component B and the ratio of the components (e.g. wt% of components A and B, giving 100 % in sum).

For such multivariante systems, the design of experiment (DoE) approach can be used. This approach allows exploring wide ranges of structure parameters with less amount of experiments (and therefore resources) and constructing a model.

It is therefore of interest to establish a method/model or mathematical correlations which allow the prediction of specific properties of the multimodal polyethylene copolymer (P).

Such methods/models and correlations would significantly reduce preparatory work before establishing a polymerization process and thus would significantly reduce production costs, would allow for faster adaptation of polymerization processes.

**Description of the invention**

The present invention is therefore directed to a metallocene-catalysed multimodal polyethylene copolymer (P), which consists of

(i) 35.0 to 50.0 wt% of an ethylene-1-butene polymer component (A), and
(ii) 50.0 to 65.0 wt% of an ethylene-1-hexene polymer component (B),

whereby the ethylene-1-butene polymer component (A) has

a density in the range of from 937 to 943 kg/$m^3$,
an $MFR_2$ (190°C, 2.16 kg, ISO 1133) in the range of from 3.5 to 8.5 g/10 min and
a 1-butene content in the range of from 0.5 to 2.5 wt%, based on the ethylene-1-butene polymer component (A); and

the ethylene polymer component (B) has

a density in the range of from 885 to 900 kg/$m^3$,
an $MFR_2$ (190°C, 2.16 kg, ISO 1133) in the range of from 0.05 to 1.5 g/10 min and
a 1-hexene content (C6) in the range of from 15.5 to 22.0 wt%, based on the ethylene-1-hexene polymer compound (B), whereby the 1-hexene content follows the equation (I)

$$30.13 - 0.1621 * B[wt\%] \geq C6\ [wt\%] \geq 26.25 - 0.1621 * B[wt\%] \quad (I);$$

whereby the multimodal polyethylene copolymer (P) has

a density in the range of from 908 to 918 kg/$m^3$,
an $MFR_2$ (190°C, 2.16 kg, ISO 1133) in the range of from 0.2 to 2.6 g/10 min and
a sealing initiation temperature (SIT), determined on a 40 μm test blown film as described in the experimental part, in the range of 60°C to ≤ 75°C .

Such multimodal polyethylene copolymers (P) are produced in at least one loop reactor and at least one gas phase reactor, preferably in a loop-loop-gas phase reactor cascade, in the presence of a metallocene catalyst.

The ethylene-1-butene polymer component (A) is thereby produced in the loop reactor(s) and the ethylene-1-hexene polymer component (B) is produced in the at least one gas phase reactor.

In one embodiment of the present invention, the ethylene polymer component (A) of the metallocene-catalysed

multimodal polyethylene copolymer (P) consists of an ethylene polymer fraction (A-1) and an ethylene polymer fraction (A-2), whereby ethylene polymer fraction (A-1) is produced in a first loop reactor and ethylene polymer fraction (A-2) is produced in a subsequent second loop reactor.

In another embodiment the present invention is related to a method of predicting the sealing initiation temperature (SIT) of a metallocene-catalysed multimodal polyethylene copolymer (P) produced in the presence of a metallocene complex of formula (I):

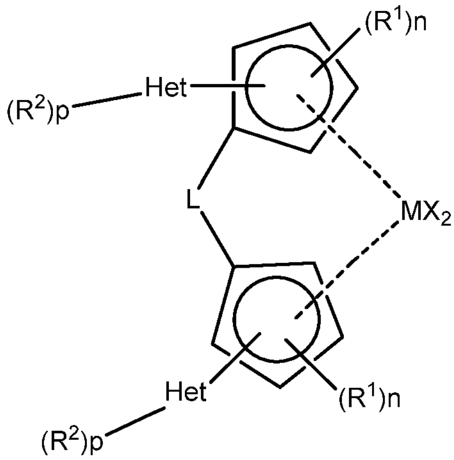

(I)

wherein each X is independently a halogen atom, a $C_{1-6}$-alkyl, $C_{1-6}$-alkoxy group, phenyl or benzyl group;
each Het is independently a monocyclic heteroaromatic containing at least one heteroatom selected from O or S;
L is -$R'_2$Si-, wherein each R' is independently $C_{1-20}$-hydrocarbyl or $C_{1-10}$-alkyl substituted with alkoxy having 1 to 10 carbon atoms;
M is Ti, Zr or Hf;
each $R^1$ is the same or different and is a $C_{1-6}$-alkyl group or $C_{1-6}$-alkoxy group;
each n is 1 to 2;
each $R^2$ is the same or different and is a $C_{1-6}$-alkyl group, $C_{1-6}$-alkoxy group or -$Si(R)_3$ group;
each R is $C_{1-10}$-alkyl or phenyl group optionally substituted by 1 to 3 $C_{1-6}$-alkyl groups; and
each p is 0 to 1;
preferably in the presence of the complex dimethylsilanediylbis[2-(5-trimethylsilylfuran-2-yl)-4,5-dimethylcyclopentadien-1-yl] zirconium dichloride,
in at least one loop reactor and at least one gas phase reactor, preferably in a loop-loop-gas phase reactor cascade, the so produced multimodal polyethylene copolymer (P) consisting of

(i) 35.0 to 50.0 wt% of an ethylene-1-butene polymer component (A), and
(ii) 50.0 to 65.0 wt% of an ethylene-1-hexene polymer component (B),

whereby in a first step the ethylene-1-butene polymer component (A) having

a density in the range of from 937 to 943 kg/$m^3$,
an $MFR_2$ (190°C, 2.16 kg, ISO 1133) in the range of from 3.5 to 8.5 g/10 min and
a 1-butene content in the range of from 0.5 to 2.5 wt%, based on the ethylene-1-butene polymer component (A),

is produced in at least one loop reactor, preferably in two subsequent loop reactors, and
whereby in a subsequent second step the ethylene polymer component (B) having

a density in the range of from 885 to 900 kg/$m^3$,
an $MFR_2$ (190°C, 2.16 kg, ISO 1133) in the range of from 0.05 to 1.5 g/10 min and
a 1-hexene content (C6) in the range of from 15.5 to 22.0 wt%, based on the ethylene-1-hexene polymer compound (B),

is produced in a gas phase reactor (GPR),
whereby the multimodal polyethylene copolymer (P) has

a density in the range of from 908 to 918 kg/$m^3$,
an $MFR_2$ (190°C, 2.16 kg, ISO 1133) in the range of from 0.2 to 2.6 g/10 min and whereby the sealing initiation temperature (SIT) for a 40 $\mu$m test blown film is predicted via equation (II)

$$SIT = 176.5 - 3.867*C6\ [wt\%;\ of\ (B)] - 0.627*B[wt\%]\ (II),$$

whereby $R^2$ of the method being $\geq$ 0.95 up to 1.0; $R^2$ being the goodness-of-fit measure for the method.

In a further embodiment the present invention is in addition related to a method of predicting the dart drop impact strength (DDI) and/or for the tensile modulus in machine direction (TM(MD)) for the above defined metallocene-catalysed multimodal polyethylene copolymer (P) produced in the presence of a metallocene complex of formula (I) in at least one loop reactor and at least one gas phase reactor, preferably in a loop-loop-gas phase reactor cascade as described above,

whereby the dart drop impact strength (DDI, ASTM D1709, method A) for a 40 $\mu$m test blown film is predicted via equation (III)

$$DDI = -294.7 + 102.6*C6\ [wt\%,\ of\ (B)] - 1452.7*lg(MFR_2)\ (III),$$

wherein $MFR_2$ is the $MFR_2$ of the final multimodal polyethylene copolymer (P) and
$R^2$ of the method being $\geq$ 0.90 up to 1.0; and/or
whereby the tensile modulus in machine direction (TM(MD), ISO 527-3 ) for a 40 $\mu$m test blown film is predicted via equation (IV)

$$MD = 359 - 11*C6\ [wt\%,\ of\ (B)] + 47.7*lg(MFR_2),$$

wherein $MFR_2$ is the $MFR_2$ of the final multimodal polyethylene copolymer (P) and
$R^2$ of the method being $\geq$ 0.93 up to 1.0.

*Definitions*

Where the term "comprising" is used in the present description and claims, it does not exclude other non-specified elements of major or minor functional importance. For the purposes of the present invention, the term "consisting of" is considered to be a preferred embodiment of the term "comprising of". If hereinafter a group is defined to comprise at least a certain number of embodiments, this is also to be understood to disclose a group, which preferably consists only of these embodiments.

Whenever the terms "including" or "having" are used, these terms are meant to be equivalent to "comprising" as defined above.

Where an indefinite or definite article is used when referring to a singular noun, e.g. "a", "an" or "the", this includes a plural of that noun unless something else is specifically stated.

$R^2$ respectively R-squared is a goodness-fit-measure. It takes into account the strength of the relationship between the model and the dependent variable. Its convenience is measured on a scale of 0 - 100%, respectively 0.0 to 1.0; whereby the closer to $R^2$ to 1.0 is, the better the model/method is.

Metallocene catalysed multimodal polyethylene copolymer is defined in this invention as multimodal polyethylene copolymer (P), which has been produced in the presence of a metallocene catalyst.

Term "multimodal" in context of multimodal polyethylene copolymer (P) means herein multimodality with respect to at least the melt flow rate (MFR) of the ethylene polymer components (A) and (B), i.e. the ethylene polymer components (A) and (B) have different MFR values. The multimodal polyethylene copolymer (P) can have further multimodality with respect to one or more further properties between the ethylene polymer components (A) and (B), as will be described later below.

The multimodal polyethylene copolymer (P) of the invention as defined above, below or in claims is also referred herein shortly as "multimodal PE" or "multimodal copolymer (P)".

The following preferable embodiments, properties and subgroups of multimodal PE and the ethylene polymer components (A) and (B) thereof, are independently generalisable so that they can be used in any order or combination to further define the preferable embodiments of the multimodal PE of the invention.

**Multimodal PE as well as ethylene polymer component (A) and (B) and ethylene polymer fractions (A-1) and (A-2)**

The metallocene produced multimodal polyethylene copolymer (P) is referred herein as "multimodal", since the ethylene-1-butene polymer component (A), optionally including ethylene polymer fractions (A-1) and (A-2), and ethylene-1-hexene polymer component (B) have been produced under different polymerization conditions resulting in different Melt Flow Rates (MFR, e.g. $MFR_2$). I.e. the multimodal PE is multimodal at least with respect to difference in MFR of the ethylene polymer components (A) and (B).
The metallocene produced multimodal polyethylene copolymer (P) consists of

(i) 35.0 to 50.0 wt% of an ethylene-1-butene polymer component (A), and
(ii) 50.0 to 65.0 wt% of an ethylene-1-hexene polymer component (B).

In an embodiment of the present invention, the ethylene-1-butene polymer component (A) consists of an ethylene polymer fraction (A-1) and (A-2).
In case that the ethylene-1-butene polymer component (A) consists of ethylene polymer fractions (A-1) and (A-2), the $MFR_2$ of the ethylene polymer fractions (A-1) and (A-2) may be different from each other or may be the same.
The ethylene polymer fractions (A-1) and (A-2) have a $MFR_2$ in the range of 2.0 to 12.0 g/10 min, preferably of 3.0 to 11.0 g/10 min, more preferably of 3.5 to 10.5 g/10 min and even more preferably of 4.0 to 10.0 g/10 min.
The $MFR_2$ of the ethylene polymer components (A) and (B) are different from each other.
The ethylene polymer component (A) has a $MFR_2$ in the range of 3.5 to 8.5 g/10 min, preferably of 4.0 to 8.0 g/10 min, more preferably of 4.5 to 7.5 g/10 min.
The ethylene polymer component (B) has a $MFR_2$ in the range of 0.05 to 1.5 g/10 min, preferably of 0.10 to 1.2 g/10 min, more preferably of 0.20 to 1.0 g/10 min.
The $MFR_2$ of the multimodal copolymer (P) is in the range of 0.2 to 2.6 g/10 min, preferably 0.3 to 2.3 g/10 min, more preferably 0.4 to 2.2 g/10 min.
Naturally, in addition to multimodality with respect to, i.e. difference between, the $MFR_2$ of ethylene polymer components (A) and (B), the multimodal PE of the invention can also be multimodal e.g. with respect to one or both of the two further properties:
multimodality with respect to, i.e. difference between,

- the comonomer content(s) present in the ethylene polymer components (A) and (B); and/or
- the density of the ethylene polymer components (A) and (B).

Preferably, the multimodal copolymer (P) is further multimodal with respect to the comonomer content of the ethylene polymer components (A) and (B).
The comonomer type for the polymer fractions (A-1) and (A-2) is the same, thus both fractions therefore have 1-butene as comonomer.
The comonomer content of component (A) and (B) can be measured, or, in case, and preferably, one of the components is produced first and the other thereafter in the presence of the first produced in so called multistage process, then the comonomer content of the first produced component, e.g. component (A), can be measured and the comonomer content of the other component, e.g. component (B), can be calculated according to following formula:

Comonomer content (wt%) in component B = (comonomer content (wt%) in final product – (weight fraction of component A * comonomer content (wt%) in component A)) / (weight fraction of component B)

The total amount of 1-butene, based on the multimodal polymer (P) is preferably in the range of from 0.1 to 1.0 wt%, preferably 0.2 to 0.8 wt% and more preferably 0.3 to 0.7 wt%.
The total amount of 1-hexene, based on the multimodal polymer (P) preferably is in the range of 8.0 to 15.0 wt%, preferably 8.5 to 14.0 wt% and more preferably 9.0 to 13.0 wt%.
The total amount (wt%) of 1-butene, present in the ethylene-1-butene polymer component (A) is of 0.5 to 2.5 wt%, preferably of 0.7 to 2.0 wt%, more preferably of 1.0 to 1.6 wt%, based on the ethylene-1-butene polymer component (A).
The total amount (wt%) of 1-hexene, present in the ethylene-1-hexene polymer component (B) is of 15.5 to 22.0 wt%, preferably of 16.0 to 21.0 wt%, more preferably of 16.5 to 20.0 wt%, based on the ethylene-1-hexene polymer component (B).

Even more preferably the multimodal polymer (P) of the invention is further multimodal with respect to difference in density between the ethylene polymer component (A) and ethylene polymer component (B). Preferably, the density of ethylene polymer component (A) is different, preferably higher, than the density of the ethylene polymer component (B).

The density of the ethylene polymer component (A) is in the range of 937 to 943 kg/$m^3$, preferably 938 to 942 kg/$m^3$, and/or the density of the ethylene polymer component (B) is of in the range of 885 to 900 kg/$m^3$, preferably of 888 to 898 kg/$m^3$.

In case that the ethylene-1-butene polymer component (A) consists of ethylene polymer fractions (A-1) and (A-2), the density of the ethylene polymer fractions (A-1) and (A-2) may be different from each other or may be the same.

The ethylene polymer fractions (A-1) and (A-2) thus have a density in the range of from 935 to 945 kg/$m^3$, preferably of 938 to 942 kg/$m^3$.

The metallocene catalysed multimodal copolymer (P) is preferably a linear low density polyethylene (LLDPE) which has a well known meaning.

The density of the multimodal copolymer (P) is in the range of 908 to 918 kg/$m^3$, preferably of 909.0 to 917 kg/$m^3$, more preferably of 910.0 to 916.0 kg/$m^3$.

More preferably the multimodal copolymer (P) is multimodal at least with respect to, i.e. has a difference between, the $MFR_2$, the comonomer content as well as with respect to, i.e. has a difference between the density of the ethylene polymer components, (A) and (B), as defined above, below or in the claims including any of the preferable ranges or embodiments of the polymer composition.

It is within the scope of the invention, that the first and the second ethylene polymer fraction (A-1 and A-2) of the ethylene polymer component (A) are present in a weight ratio of 4:1 up to 1:4, preferably 3:1 to 1:3, more preferably 2:1 to 1:2, and even more preferably 1.5:1 to 1:1.5.

The ethylene polymer component (A) is present in an amount of 35.0 to 50.0 wt% based on the multimodal copolymer (P), preferably in an amount of 36.0 to 48.0 wt% and even more preferably in an amount of 38.0 to 46.0 wt%.

Thus, the ethylene polymer component (B) is present in an amount of 50.0 to 65.0 wt% based on the multimodal copolymer (P), preferably in an amount of 52.0 to 64.0 wt% and more preferably in an amount of 54.0 to 62.0 wt%.

The metallocene catalysed multimodal copolymer (P) is produced in at least one loop reactor and at least one gas phase reactor, preferably in a loop-loop-gas phase reactor cascade.

Thus, the metallocene catalysed multimodal copolymer (P), can be produced in a 2-stage process, preferably comprising a slurry reactor (loop reactor), whereby the slurry (loop) reactor is connected in series to a gas phase reactor (GPR), whereby the ethylene polymer component (A) is produced in the loop reactor and the ethylene polymer component (B) is produced in GPR in the presence of the ethylene polymer component (A) to produce the multimodal copolymer (P).

In case that the ethylene component (A) of the multimodal copolymer (P) consists of ethylene polymer fractions (A-1) and (A-2), the multimodal copolymer (P) can be produced with a 3-stage process, preferably comprising a first slurry reactor (loop reactor 1), whereby the first slurry loop reactor is connected in series with another slurry reactor (loop reactor 2), so that the first ethylene polymer fraction (A-1) produced in the loop reactor 1 is fed to the loop reactor 2, wherein the second ethylene polymer fraction (A-2) is produced in the presence of the first fraction (A-1). The loop reactor 2 is thereby connected in series to a gas phase reactor (GPR), so that the first ethylene polymer component (A) leaving the second slurry reactor is fed to the GPR to produce a trimodal polyethylene copolymer. In this case, the reaction conditions in the two slurry reactors are chosen in a way that in the two slurry reactors different products in view of MFR and/or density are produced.

Such a process is described inter alia in WO 2016/198273, WO 2021009189, WO 2021009190, WO 2021009191 and WO 2021009192. Full details of how to prepare suitable metallocene catalysed multimodal copolymer (P) can be found in these references.

A suitable process is the Borstar PE process or the Borstar PE 3G process.

The metallocene catalysed multimodal copolymer (P) according to the present invention is therefore preferably produced in a loop loop gas cascade. Such polymerization steps may be preceded by a prepolymerization step. The purpose of the prepolymerization is to polymerize a small amount of polymer onto the catalyst at a low temperature and/or a low monomer concentration. By prepolymerization it is possible to improve the performance of the catalyst in slurry and/or modify the properties of the final polymer. The prepolymerization step is preferably conducted in slurry and the amount of polymer produced in an optional prepolymerization step is counted to the amount (wt%) of ethylene polymer component (A).

The catalyst components are preferably all introduced to the prepolymerization step when a prepolymerization step is present. However, where the solid catalyst component and the cocatalyst can be fed separately it is possible that only a part of the cocatalyst is introduced into the prepolymerization stage and the remaining part into subsequent polymerization stages. Also in such cases it is necessary to introduce so much cocatalyst into the prepolymerization stage that a sufficient polymerization reaction is obtained therein.

It is understood within the scope of the invention, that the amount or polymer produced in the prepolymerization lies within 1.0 to 5.0 wt% in respect to the final metallocene catalysed multimodal copolymer (P). This can counted as

part of the first ethylene polymer component (A).

*Catalyst*

The metallocene catalysed multimodal copolymer (P) used in the process of the invention is one made using a metallocene catalyst. A metallocene catalyst comprises a metallocene complex and a cocatalyst. The metallocene compound or complex is referred herein also as organometallic compound (C).

The organometallic compound (C) comprises a transition metal (M) of Group 3 to 10 of the Periodic Table (IUPAC 2007) or of an actinide or lanthanide.

The term "an organometallic compound (C)" in accordance with the present invention includes any metallocene or non-metallocene compound of a transition metal, which bears at least one organic (coordination) ligand and exhibits the catalytic activity alone or together with a cocatalyst. The transition metal compounds are well known in the art and the present invention covers compounds of metals from Group 3 to 10, e.g. Group 3 to 7, or 3 to 6, such as Group 4 to 6 of the Periodic Table, (IUPAC 2007), as well as lanthanides or actinides.

In an embodiment, the organometallic compound (C) has the following formula (I):

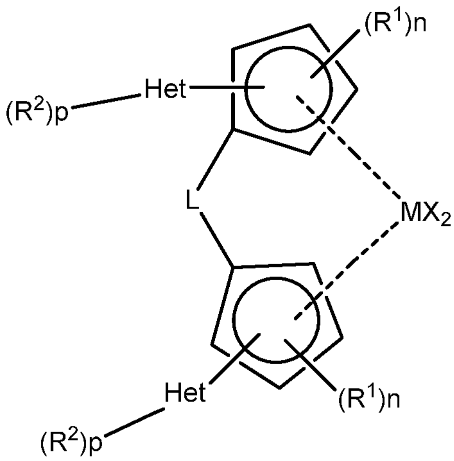

(I)

wherein each X is independently a halogen atom, a $C_{1-6}$-alkyl, $C_{1-6}$-alkoxy group, phenyl or benzyl group;
each Het is independently a monocyclic heteroaromatic containing at least one heteroatom selected from O or S;
L is -$R'_2$Si-, wherein each R' is independently $C_{1-20}$-hydrocarbyl or $C_{1-10}$-alkyl substituted with alkoxy having 1 to 10 carbon atoms;
M is Ti, Zr or Hf;
each $R^1$ is the same or different and is a $C_{1-6}$-alkyl group or $C_{1-6}$-alkoxy group;
each n is 1 to 2;
each $R^2$ is the same or different and is a $C_{1-6}$-alkyl group, $C_{1-6}$-alkoxy group or -$Si(R)_3$ group;
each R is $C_{1-10}$-alkyl or phenyl group optionally substituted by 1 to 3 $C_{1-6}$-alkyl groups; and
each p is 0 to 1.

Preferably, the compound of formula (I) has the structure

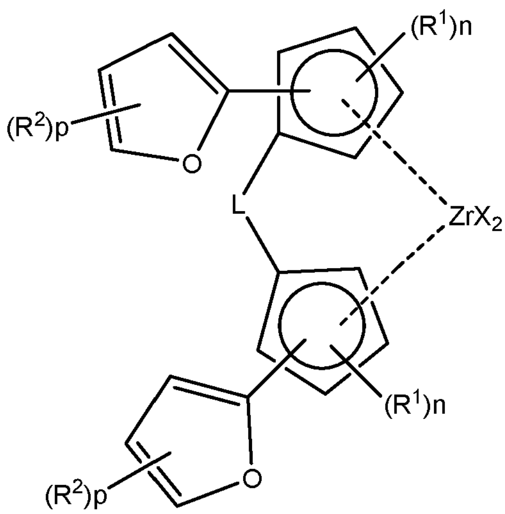

(I′)

wherein each X is independently a halogen atom, a $C_{1-6}$-alkyl, $C_{1-6}$-alkoxy group, phenyl or benzyl group;
L is a $Me_2Si$-;
each $R^1$ is the same or different and is a $C_{1-6}$-alkyl group, e.g. methyl or t-Bu;
each n is 1 to 2;
$R^2$ is a -$Si(R)_3$ alkyl group; each p is 1;
each R is $C_{1-6}$-alkyl or phenyl group.

Highly preferred complexes of formula (I) are

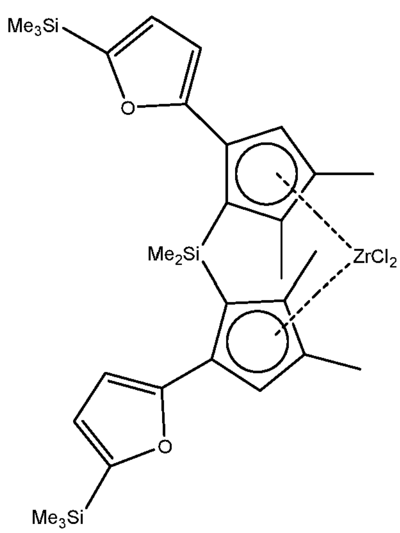

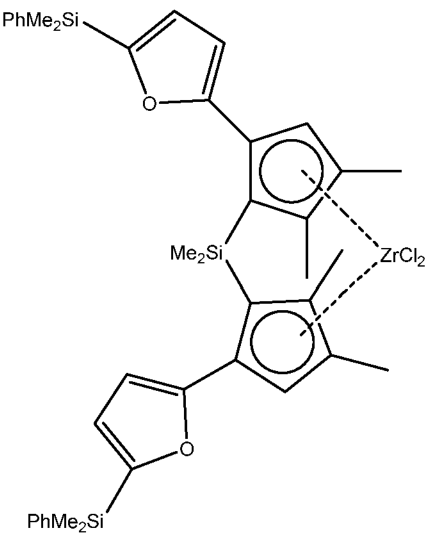

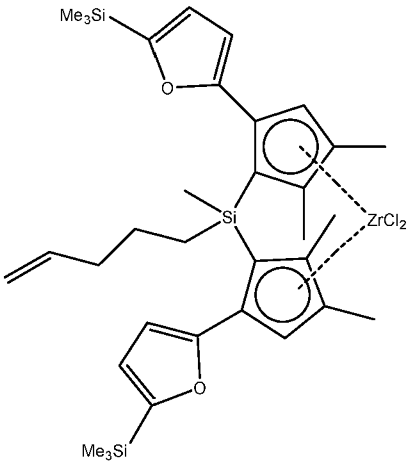

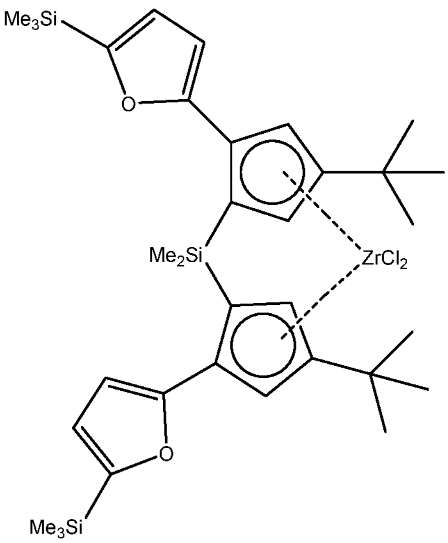

Most preferably the complex dimethylsilanediylbis[2-(5-trimethylsilylfuran-2-yl)-4,5-dimethylcyclopentadien-1-yl] zirconium dichloride is used.

More preferably the ethylene polymer components (A) and (B) of the multimodal copolymer (P) are produced using, i.e. in the presence of, the same metallocene catalyst.

To form a catalyst, a cocatalyst, also known as an activator, is used, as is well known in the art. Cocatalysts comprising Al or B are well known and can be used here. The use of aluminoxanes (e.g. MAO) or boron based cocatalysts (such as borates) is preferred.

Polyethylene copolymers made using single site catalysis, as opposed to Ziegler Natta catalysis, have characteristic features that allow them to be distinguished from Ziegler Natta materials. In particular, the comonomer distribution is more homogeneous. This can be shown using TREF or Crystaf techniques. Catalyst residues may also indicate the catalyst used. Ziegler Natta catalysts would not contain a Zr or Hf group (IV) metal for example.

The metallocene catalysed multimodal copolymer (P) may contain further polymer components and optionally additives and/or fillers. In case the metallocene catalysed multimodal copolymer (P) contains further polymer components, then the amount of the further polymer component(s) typically varies between 3.0 to 20.0 wt% based on the combined amount of the metallocene catalysed multimodal copolymer (P) and the other polymer component(s).

The optional additives and fillers and the used amounts thereof are conventional in the field of film applications. Examples of such additives are, among others, antioxidants, process stabilizers, UV-stabilizers, pigments, fillers, antistatic additives, antiblock agents, nucleating agents, acid scavengers as well as polymer processing agent (PPA).

It is understood herein that any of the additives and/or fillers can optionally be added in so-called master batch, which comprises the respective additive(s) together with a carrier polymer. In such case the carrier polymer is not calculated to the polymer components of the metallocene catalysed multimodal copolymer (P), but to the amount of the respective additive(s), based on the total amount of polymer composition (100 wt%).

**Film of the invention**

The above described multimodal polyethylene copolymer (P) can be used for producing films, preferably blown films.

Thus, in an embodiment the invention is related to the use of the described multimodal polyethylene copolymer (P) can be used for producing films, preferably blown films and to the films comprising the multimodal polyethylene copolymer (P).

The film of the invention comprises at least one layer comprising the metallocene catalysed multimodal copolymer (P). The film can be a monolayer film comprising the metallocene catalysed multimodal copolymer (P) or a multilayer film, wherein at least one layer comprises the metallocene catalysed multimodal copolymer (P). The terms "monolayer film" and multilayer film" have well known meanings in the art.

The layer of the monolayer or multilayer film of the invention may consist of the metallocene catalysed multimodal copolymer (P) as such or of a blend of the metallocene catalysed multimodal copolymer (P) together with further polymer(s). In case of blends, any further polymer is different from the metallocene catalysed multimodal copolymer (P) and is preferably a polyolefin. Part of the above mentioned additives, like processing aids, can optionally added to the metallocene catalysed multimodal copolymer (P) during the film preparation process.

Preferably, the at least one layer of the invention comprises at least 50 wt%, more preferably at least 60 wt%, even more preferably at least 70 wt%, yet more preferably at least 80 wt%, of the metallocene catalysed multimodal copolymer (P) of the invention. Most preferably said at least one layer of the film of invention consists of the metallocene catalysed multimodal copolymer (P).

Accordingly, the films of the present invention may comprise a single layer (i.e. monolayer) or may be multilayered. Multilayer films typically, and preferably, comprise at least 3 layers.

The films are preferably produced by any conventional film extrusion procedure known in the art including cast film and blown film extrusion. Most preferably, the film is a blown or cast film, especially a blown film. E.g. the blown film is produced by extrusion through an annular die and blowing into a tubular film by forming a bubble which is collapsed between nip rollers after solidification. This film can then be slit, cut or converted (e.g. gusseted) as desired. Conventional film production techniques may be used in this regard. If the preferable blown or cast film is a multilayer film then the various layers are typically coextruded. The skilled man will be aware of suitable extrusion conditions.

Films according to the present invention may be subjected to post-treatment processes, e.g. surface modifications, lamination or orientation processes or the like. Such orientation processes can be mono-axially (MDO) or biaxially orientation, wherein mono-axial orientation is preferred.

In another preferred embodiment, the films are unoriented.

The resulting films may have any thickness conventional in the art. The thickness of the film is not critical and depends on the end use. Thus, films may have a thickness of, for example, 300 μm or less, typically 6 to 200 μm, preferably 10 to 180 μm, e.g. 20 to 150 μm or 20 to 120 μm. If desired, the polymer of the invention enables thicknesses of less than 100 μm, e.g. less than 50 μm. Films of the invention with thickness even less than 20 μm can also be produced whilst maintaining good mechanical properties.

Furthermore, the present invention is also directed to the use of the inventive article as packing material, in particular as a packing material for food and/or medical products.

The films of the invention are characterized by a sealing initiation temperature determined as described in the experimental part on a test blown film with a thickness of 40 μm in the range of 60°C to ≤ 75°C, preferably in the range of 65°C to 74°C, more preferably in the range of 68°C to 74°C, in case that the 1-hexene content of the polymer component (B) follows the equation (I)

$$30.13 - 0.1621*B[wt\%] \geq C6\ [wt\%,\ of\ (B)] \geq 26.25 - 0.1621*B[wt\%]\ (I)$$

In an embodiment, the films comprising the metallocene catalysed multimodal copolymer (P) are additionally characterized by a dart-drop impact strength (DDI) determined according to ASTM D1709, method A on a 40 μm monolayer test blown film of at least 1100 g to more than 1700 g.

The upper limit of "more than 1700 g" is due to the upper detection limit of 1700 g of the respective method.

Thus, in a preferred embodiment, the films comprising the metallocene catalysed multimodal polyethylene copolymer (P) are characterized by having at least

a) a sealing initiation temperature determined as described in the experimental part on a test blown film with a thickness of 40 μm of ≤ 75°C, preferably in the range of 60°C to 75°C, more preferably in the range of 65°C to 74°C, like 68°C to 74°C,

and

b) a dart-drop impact strength (DDI) determined according to ASTM D1709, method A on a 40 μm monolayer test blown film of at least 1100 g to more than 1700 g.

Films according to the present invention furthermore have good stiffness (tensile modulus measured on a 40 μm monolayer test blown film according to ISO 527-3), i.e. ≥ 150MPa (in machine directions), preferably in the range of from >150MPa to 300 MPa, preferably of from >150MPa to 250 MPa.

Thus, in a preferred embodiment, the films comprising the metallocene catalysed multimodal polyethylene copolymer (P) are characterized by having at least

a) a sealing initiation temperature determined as described in the experimental part on a blown film with a thickness of 40 μm of ≤ 75°C, preferably in the range of 60°C to 75°C, more preferably in the range of 65°C to 74°C, like 68°C to 74°C,

and

b) a dart-drop impact strength (DDI) determined according to ASTM D1709, method A on a 40 μm monolayer test blown film of at least 1100 g to more than 1700 g,

and

c) a tensile modulus measured on a 40 μm monolayer test blown film according to ISO 527-3), of ≥150MPa, preferably in the range of from >150MPa to 300 MPa, preferably of from >150MPa to 250 MPa.

**Method of prediction of SIT, DDI, TM**

In an embodiment the present invention is also related to a method for prediction of the sealing initiation temperature (SIT) of a metallocene-catalysed multimodal polyethylene copolymer (P) produced in the presence of a metallocene complex of formula (I) as defined above,

in at least one loop reactor and at least one gas phase reactor, preferably in a loop-loop-gas phase reactor cascade, the so produced multimodal polyethylene copolymer (P) consisting of

(i) 35.0 to 50.0 wt% of an ethylene-1-butene polymer component (A), and
(ii) 50.0 to 65.0 wt% of an ethylene-1-hexene polymer component (B),

whereby in a first step the ethylene-1-butene polymer component (A) having

a density in the range of from 937 to 943 kg/$m^3$,
an $MFR_2$ (190°C, 2.16 kg, ISO 1133) in the range of from 3.5 to 8.5 g/10 min and
a 1-butene content in the range of from 0.5 to 2.5 wt%, based on the ethylene-1-butene polymer component (A),

is produced in at least one loop reactor, preferably in two subsequent loop reactors, and
whereby in a subsequent second step the ethylene polymer component (B) having

a density in the range of from 885 to 900 kg/$m^3$,
an $MFR_2$ (190°C, 2.16 kg, ISO 1133) in the range of from 0.05 to 1.5 g/10 min and
a 1-hexene content (C6) in the range of from 15.5 to 22.0 wt%, based on the ethylene-1-hexene polymer compound (B),

is produced in a gas phase reactor (GPR),
whereby the multimodal polyethylene copolymer (P) has

a density in the range of from 9058 to 918 kg/$m^3$,
an $MFR_2$ (190°C, 2.16 kg, ISO 1133) in the range of from 0.5 to 2.3 g/10 min and

whereby the sealing initiation temperature (SIT) for a 40 μm test blown film is predicted via equation (II)

$$SIT = 176.5 - 3.867*C6\,[wt\%;\,of\,(B)] - 0.627*B[wt\%] \quad (II),$$

whereby $R^2$ of the method being ≥ 0.95 up to 1.0; $R^2$ being the goodness-of-fit measure for the method.

Preferably $R^2$ is ≥ 0.96 up to 1.0, more preferably ≥ 0.97 up to 1.0 and even more preferably ≥ 0.98 up to 1.0

In a further embodiment the present invention is in addition related to a method of predicting the dart drop impact strength (DDI) and/or for the tensile modulus in machine direction (TM(MD)) for the above defined metallocene-catalysed multimodal polyethylene copolymer (P) produced in the presence of a metallocene complex of formula (I) in at least one loop reactor and at least one gas phase reactor, preferably in a loop-loop-gas phase reactor cascade,

whereby the dart drop impact strength (DDI, ASTM D1709, method A) for a 40 μm test blown film is predicted via equation (III)

$$DDI = -294.7 + 102.6*C6\,[wt\%,\,of\,(B)] - 1452.7*lg(MFR_2) \quad (III),$$

wherein $MFR_2$ is the $MFR_2$ of the final multimodal polyethylene copolymer (P) and
$R^2$ of the method being ≥ 0.90 up to 1.0, preferably ≥ 0.91 up to 1.0 and/or
whereby the tensile modulus in machine direction (TM(MD), ISO 527-3 ) for a 40 μm test blown film is predicted via equation (IV)

$$MD = 359 - 11*C6\ [wt\%, of\ (B)] + 47.7*lg(MFR_2),$$

wherein $MFR_2$ is the $MFR_2$ of the final multimodal polyethylene copolymer (P) and
$R^2$ of the method being ≥ 0.93 up to 1.0, preferably ≥ 0.94 up to 1.0 and more preferably ≥ 0.95 up to 1.0.

The development of the relation of SIT, DDI and TM and hexane content as well as GPR split, respectively MFR2 is based on Design of Experiments (DoE) with fixed loop parameters, as described in more detail in the experimental part.

The invention will be further described with reference to the following non-limiting examples.

**Determination methods**

Unless otherwise stated in the description or in the experimental part, the following methods were used for the property determinations of the polymers (including its fractions and components) and/or any sample preparations thereof as specified in the text or experimental part.

**Melt Flow Rate**

The melt flow rate (MFR) was determined according to ISO 1133 and is indicated in g/10 min. The MFR is an indication of the flowability, and hence the processability, of the polymer. The higher the melt flow rate, the lower the viscosity of the polymer. The MFR is determined at 190 °C for polyethylene. MFR may be determined at different loadings such as 2.16 kg ($MFR_2$), 5 kg ($MFR_5$) or 21.6 kg ($MFR_{21}$).

*Calculation of $MFR_2$ of Component B and of Fraction (A-2)*

$$logA = x \cdot logB + (1-x) \cdot logC$$

$$C = 10^\wedge \frac{(logA - x.logB)}{(1-x)}$$

For Component B:

B = $MFR_2$ of Component (A)
C = $MFR_2$ of Component (B)
A = final $MFR_2$ (mixture) of multimodal polyethylene copolymer (P)
X = weight fraction of Component (A)

For Fraction (A-2):

B = $MFR_2$ of 1st fraction (A-1)
C = $MFR_2$ of 2nd fraction (A-2)
A = final $MFR_2$ (mixture) of loop polymer (= Component (A))
X = weight fraction of the 1st fraction (A-1)

**Density**

Density of the polymer was measured according to ASTM; D792, Method B (density by balance at 23°C) on compression moulded specimen prepared according to EN ISO 1872-2 and is given in kg/$m^3$.

**Comonomer contents:**

**Quantification of microstructure by NMR spectroscopy**

Quantitative nuclear-magnetic resonance (NMR) spectroscopy was used to quantify the comonomer content of the polymers.

Quantitative $^{13}C\{^1H\}$ NMR spectra recorded in the molten-state using a Bruker Avance III 500 NMR spectrometer operating at 500.13 and 125.76 MHz for $^1H$ and $^{13}C$ respectively. All spectra were recorded using a $^{13}C$ optimized 7 mm magic-angle spinning (MAS) probehead at 150°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification {klimke06, parkinson07, castignolles09}. Standard single-pulse excitation was employed utilizing the NOE at short recycle delays of 3 s {pollard04, klimke06} and the RS-HEPT decoupling scheme{fillip05,griffin07}. A total of 1024 (1k) transients were acquired per spectra. Quantitative $^{13}C\{^1H\}$ NMR spectra were processed, integrated and relevant quantitative properties determined from the integrals. All chemical shifts are internally referenced to the bulk methylene signal (δ+) at 30.00 ppm.

The amount of ethylene was quantified using the integral of the methylene (δ+) sites at 30.00 ppm accounting for the number of reporting sites per monomer:

$$E = I_{\delta+} / 2$$

the presence of isolated comonomer units is corrected for based on the number of isolated comonomer units present:

$$Etotal = E + (3*B + 2*H) / 2$$

where B and H are defined for their respective comonomers. Correction for consecutive and non-consecutive commoner incorporation, when present, is undertaken in a similar way. Characteristic signals corresponding to the incorporation of 1-butene were observed and the comonomer fraction calculated as the fraction of 1-butene in the polymer with respect to all monomer in the polymer:

$$fBtotal = Btotal / (Etotal + Btotal + Htotal)$$

The amount isolated 1-butene incorporated in EEBEE sequences was quantified using the integral of the *B2 sites at 39.8 ppm accounting for the number of reporting sites per comonomer:

$$B = I_{*B2}$$

If present the amount consecutively incorporated 1-butene in EEBBEE sequences was quantified using the integral of the ααB2B2 site at 39.4 ppm accounting for the number of reporting sites per comonomer:

$$BB = 2 * I\alpha\alpha B2B2$$

If present the amount non consecutively incorporated 1-butene in EEBEBEE sequences was quantified using the integral of the ββB2B2 site at 24.6 ppm accounting for the number of reporting sites per comonomer:

$$BEB = 2 * I\beta\beta B2B2$$

Due to the overlap of the *B2 and *βB2B2 sites of isolated (EEBEE) and non-consecutively incorporated (EEBEBEE) 1-butene respectively the total amount of isolated 1-butene incorporation is corrected based on the amount of non-consecutive 1-butene present:

$$B = I_{*B2} - 2 * I_{\beta\beta B2B2}$$

Sequences of BBB were not observed. The total 1-butene content was calculated based on the sum of isolated, consecutive and non consecutively incorporated 1-butene:

$$Btotal = B + BB + BEB$$

The total mole fraction of 1-butene in the polymer was then calculated as:

$$fB = Btotal / ( Etotal + Btotal + Htotal)$$

Characteristic signals corresponding to the incorporation of 1-hexene were observed and the comonomer fraction calculated as the fraction of 1-hexene in the polymer with respect to all monomer in the polymer:

$$fHtotal = Htotal / (Etotal + Btotal + Htotal)$$

The amount isolated 1-hexene incorporated in EEHEE sequences was quantified using the integral of the $*B4$ sites at 38.3 ppm accounting for the number of reporting sites per comonomer:

$$H = I_{*B4}$$

If present the amount consecutively incorporated 1-hexene in EEHHEE sequences was quantified using the integral of the $\alpha\alpha B4B4$ site at 40.5 ppm accounting for the number of reporting sites per comonomer:

$$HH = 2 * I\alpha\alpha B4B4$$

If present the amount non consecutively incorporated 1-hexene in EEHEHEE sequences was quantified using the integral of the $\beta\beta B4B4$ site at 24.7 ppm accounting for the number of reporting sites per comonomer:

$$HEH = 2 * I\beta\beta B4B4$$

Sequences of HHH were not observed. The total 1-hexene content was calculated based on the sum of isolated, consecutive and non consecutively incorporated 1-hexene:

$$Htotal = H + HH + HEH$$

The total mole fraction of 1-hexene in the polymer was then calculated as:

$$fH = Htotal / ( Etotal + Btotal + Htotal)$$

The mole percent comonomer incorporation is calculated from the mole fraction:

$$B [mol\%] = 100 * fB$$

$$H [mol\%] = 100 * fH$$

The weight percent comonomer incorporation is calculated from the mole fraction:

$$B [wt\%] = 100 * ( fB * 56.11) / ( (fB * 56.11) + (fH * 84.16) + ((1-(fB + fH)) * 28.05) )$$

$$H [wt\%] = 100 * ( fH * 84.16 ) / ( (fB * 56.11) + (fH * 84.16) + ((1-(fB + fH)) * 28.05) )$$

References:

Klimke, K., Parkinson, M., Piel, C., Kaminsky, W., Spiess, H.W., Wilhelm, M., Macromol. Chem. Phys. 2006;207:382.
Parkinson, M., Klimke, K., Spiess, H.W., Wilhelm, M., Macromol. Chem. Phys. 2007;208:2128. Pollard, M., Klimke, K., Graf, R., Spiess, H.W., Wilhelm, M., Sperber, O., Piel, C., Kaminsky, W., Macromolecules 2004;37:813.
Filip, X., Tripon, C., Filip, C., J. Mag. Resn. 2005, 176, 239
Griffin, J.M., Tripon, C., Samoson, A., Filip, C., and Brown, S.P., Mag. Res. in Chem. 2007 45, S1, S198
Castignolles, P., Graf, R., Parkinson, M., Wilhelm, M., Gaborieau, M., Polymer 50 (2009) 2373 Busico, V., Cipullo, R., Prog. Polym. Sci. 26 (2001) 443
Busico, V., Cipullo, R., Monaco, G., Vacatello, M., Segre, A.L., Macromoleucles 30 (1997) 6251
Zhou, Z., Kuemmerle, R., Qiu, X., Redwine, D., Cong, R., Taha, A., Baugh, D. Winniford, B., J. Mag. Reson. 187 (2007) 225
Busico, V., Carbonniere, P., Cipullo, R., Pellecchia, R., Severn, J., Talarico, G., Macromol. Rapid Commun. 2007, 28, 1128
Resconi, L., Cavallo, L., Fait, A., Piemontesi, F., Chem. Rev. 2000, 100, 1253


**Sealing initiation temperature (SIT); sealing end temperature (SET), sealing range:**

The method determines the sealing temperature range (sealing range) of polyethylene films, in particular blown films or cast films. The sealing temperature range is the temperature range, in which the films can be sealed according to conditions given below.

The lower limit (heat sealing initiation temperature (SIT)) is the sealing temperature at which a sealing strength of ≥ 5 N is achieved. The upper limit (sealing end temperature (SET)) is reached, when the films stick to the sealing device. The measurement was done according to the slightly modified ASTM F1921 - 12, where the test parameters sealing pressure, cooling time and test speed have been modified. The determination of the force/temperature curve was continued until thermal failure of the film.

The sealing range was determined on a J&B Universal Sealing Machine Type 4000 with a blown film of 40 μm thickness with the following further parameters:

Conditioning time: > 96 h
Specimen width: 25 mm
Sealing pressure: 0.4 $N/mm^2$ (PE)
Sealing time: 1 sec
Delay time: 30 sec
Sealing jaws dimension: 50x5 mm
Sealing jaws shape: flat
Sealing jaws coating: Niptef
Sealing temperature: ambient - 240°C
Sealing temperature interval: 5°C
Start temperature: 50°C
Grip separation rate: 42 mm/sec

**Dart drop strength (DDI)**

Dart-drop was measured using ASTM D1709, method A (Alternative Testing Technique) from the films as produced indicated below. A dart with a 38 mm diameter hemispherical head was dropped from a height of 0.66 m onto a multilayer film clamped over a hole. Successive sets of twenty specimens were tested. One weight was used for each set and the weight was increased (or decreased) from set to set by uniform increments. The weight resulting in failure of 50 % of the specimens was calculated and reported.

**Tensile Modulus**

Tensile modulus (E-Mod (MPa) was measured in machine and/or transverse direction according to ISO 527-3

on film samples prepared as described under the Film Sample preparation with film thickness of 40 μm and at a cross head speed of 1 mm/min for the modulus.

**Film sample preparation**

The test films consisting of the inventive multimodal copolymer (P) and respective comparative polymers of 40 μm thickness, were prepared using a Collin 30 lab scale mono layer blown film line. The film samples were produced at ~ 194°C, a 1:2.5 blow-up ratio, frostline distance of 120 mm.

**DoE method description:**

Full factorial 23 Design of Experiments (DoE) was performed. Three independent parameters were varied in this DoE:

- 1-hexene content (wt%) in component B. It was varied from 10 wt% ± about 2 wt% (corner points with min value) till 17 wt% ± about 2 wt% (corner points with max value), central points - 12 wt% ± about 1 wt%;
- Content of component B in final composition (wt%). It was varied from 55 ± about 1 wt% (corner points with min value) till 61 wt% ± about 1 wt% (corner points with max value), central points - 58 wt% ± about 1 wt%;
- MFR 2 of final composition P (logarithmic form). It was varied from 0.7 g/10min ± about 0.2 g/10min (corner points with min value) till 2.1 g/10min ± about 0.2 g/10min (corner points with max value), central points - 1.4 g/10min ± about 0.1 g/10min.

The composition of component A was fixed with density 940 kg/m3 ± 2 kg/m3 and MFR 2 was 6 g/10min ± 2 g/10min. The actual values produced in composition A were used for calculation of the necessary parameters, e.g. 1-hexene content (wt%) in component B, as described above.

As the responses, density of final composition, SIT, DDI and tensile modulus MD were used, they were measured as described above.

The program Design-Expert (version 11) was used for the data analyses and models construction.

Study type - response surface;
Design model - linear.

ANOVA statistics was used for the models analyses.

$R^2$ was reached higher than 0.95 for density, SIT and tensile modulus (MD) models.

$R^2$ for DDI model was lower, but higher than 0.91. The lower value for R2 for DDI is explained by the method limitation, see description above.

**Experimental part**

**Cat.Example: Catalyst preparation**

*Loading of SiO2:*

10 kg of silica (PQ Corporation ES757, calcined 600°C) was added from a feeding drum and inertized in the reactor until $O_2$ level below 2 ppm was reached.

*Preparation of MAO/tol/Me:*

30 wt% MAO in toluene (14.1 kg) was added into another reactor from a balance followed by toluene (4.0 kg) at 25°C (oil circulation temp) and stirring 95 rpm. Stirring speed was increased 95 rpm -> 200 rpm after toluene addition, stirring time 30 min. Metallocene Rac-dimethylsilanediylbis{2-(5-(trimethylsilyl)furan-2-yl)-4,5-dimethylcyclopentadien-1-yl}zirconium dichloride 477 g was added from a metal cylinder followed by flushing with 4 kg toluene (total toluene amount 8.0 kg). Reactor stirring speed was changed to 95 rpm for MC feeding and returned back to 200 rpm for 3 h reaction time. After reaction time MAO/tol/MC solution was transferred into a feeding vessel.

*Preparation of catalyst:*

Reactor temperature was set to 10°C (oil circulation temp) and stirring 40 rpm for MAO/tol/MC addition.

MAO/tol/MC solution (target 22.5 kg, actual 22.2 kg) was added within 205 min followed by 60 min stirring time (oil circulation temp was set to 25°C). After stirring "dry mixture" was stabilised for 12 h at 25°C (oil circulation temp), stirring 0 rpm. Reactor was turned 20° (back and forth) and stirring was turned on 5 rpm for few rounds once an hour.

After stabilisation the catalyst was dried at 60°C (oil circulation temp) for 2 h under nitrogen flow 2 kg/h, followed by 13 h under vacuum (same nitrogen flow with stirring 5 rpm). Dried catalyst was sampled and HC content was measured in the glove box with Sartorius Moisture Analyser, (Model MA45) using thermogravimetric method. Target HC level was < 2% (actual 1.3 %).

**Polymerization: Inventive Examples: Inventive multimodal polyethylene copolymers (P) with 1-butene and 1-hexene comonomers**

Borstar pilot plant with a 3-reactor set-up (loop1 - loop2 - GPR 1) and a prepolymerization loop reactor.

The inventive multimodal copolymers (P) as well as of the comparative examples were produced by using the polymerization conditions as given in Table 1.

**Table 1:** Polymerization conditions

| | CE1 | CE2 | CE3 | CE4 | CE5 | CE6 | CE7 | CE8 | IE1 | IE2 | IE3 |
|---|---|---|---|---|---|---|---|---|---|---|---|
| **Prepoly reactor** | | | | | | | | | | | |
| **Lot** | **5608** | **5609** | **5610** | **5613** | **5614** | **5615** | **5616** | **5619** | **5611** | **5612** | **5618** |
| Catalyst feed (g/h) | 35.5 | 34.8 | 34.8 | 34.2 | 23.8 | 24.0 | 26.0 | 27.4 | 35.0 | 34.7 | 30.8 |
| Temp. (°C) | 50 | 50 | 50 | 50 | 50 | 50 | 50 | 50 | 50 | 50 | 50 |
| Press. (kPa) | 5635 | 5687 | 5652 | 5650 | 5632 | 5687 | 5622 | 5681 | 5679 | 5678 | 5626 |
| C2 (kg/h) | 4.0 | 4.0 | 4.0 | 4.0 | 4.0 | 4.0 | 4.0 | 4.0 | 4.0 | 4.0 | 4.0 |
| H2(g/h) | 0.0 | 0.0 | 0.0 | 0.0 | 0.0 | 0.0 | 0.0 | 0.0 | 0.0 | 0.0 | 0.0 |
| C4 (g/h) | 79.3 | 86.9 | 84.4 | 83.8 | 81.5 | 87.7 | 78.2 | 103.2 | 87.3 | 88.1 | 81.8 |
| Split (wt%) | 3.4 | 3.4 | 3.5 | 3.5 | 3.4 | 3.5 | 3.7 | 3.5 | 3.4 | 3.4 | 3.6 |
| **loop 1 Fraction (A-1)** | | | | | | | | | | | |
| Temp. (°C) | 85 | 85 | 85 | 85 | 85 | 85 | 85 | 85 | 85 | 85 | 85 |
| Press. (kPa) | 5545 | 5529 | 5530 | 5531 | 5548 | 5537 | 5533 | 5557 | 5529 | 5527 | 5542 |
| C2 conc. (mol%) | 3.9 | 3.3 | 3,3 | 3.1 | 4.2 | 4.4 | 4.7 | 3.9 | 3.2 | 3.2 | 4.1 |
| H2/C2 ratio (mol/kmol) | 0.5 | 0.5 | 0.4 | 0.4 | 0.5 | 0.4 | 0.4 | 0.5 | 0.5 | 0.5 | 0.5 |
| C4/C2 ratio (mol/kmol) | 51.2 | 46.6 | 46.9 | 47.4 | 48.5 | 43.8 | 39.8 | 46.6 | 48.5 | 47.4 | 51.8 |
| Split (wt%) | 18.4 | 17.1 | 17.0 | 17.0 | 19.0 | 18.3 | 18.8 | 16.7 | 16.5 | 16.5 | 19.5 |
| Density (kg/m3) of loop 1 material (fraction (A-1)) | 939.5 | 940.6 | 940.3 | 936.5 | 938.6 | 938.8 | 939.5 | 940.9 | 940.6 | 940.6 | 940.9 |

| | | | | | | | | | | | |
|---|---|---|---|---|---|---|---|---|---|---|---|
| $MFR_2$ (g/10 min) of loop 1 material (fraction (A-1)) | 6.5 | 7.2 | 5.3 | 6.0 | 7.6 | 6.6 | 4.8 | 6.5 | 6.1 | 4.8 | 7.3 |
| **loop 2** | | | | | | | | | | | |
| Temp. (°C) | 85 | 85 | 85 | 85 | 85 | 85 | 85 | 85 | 85 | 85 | 85 |
| Press. (kPa) | 5343 | 5313 | 5329 | 5321 | 5348 | 5341 | 5338 | 5363 | 5323 | 5320 | 5347 |
| C2 conc. (mol%) | 3.7 | 3.2 | 3.4 | 3.3 | 4.0 | 4.1 | 4.2 | 3.9 | 3.3 | 3.3 | 3.9 |
| H2/C2 ratio (mol/kmol) | 0.4 | 0.4 | 0.4 | 0.4 | 0.4 | 0.3 | 0.4 | 0.4 | 0.4 | 0.4 | 0.4 |
| C4/C2 ratio (mol/kmol) | 32.0 | 39.7 | 37.6 | 28.9 | 25.8 | 24.9 | 22.8 | 33.1 | 30.9 | 31.1 | 27.8 |
| Split (wt%) | 22.9 | 18.4 | 18.7 | 19.0 | 19.8 | 21.8 | 22.6 | 18.7 | 18.4 | 18.4 | 22.2 |
| Density (kg/m3) after loop 2 (component (A)) | 939.5 | 938.8 | 938.1 | 938.9 | 938.7 | 939.5 | 940.4 | 940.3 | 940.4 | 940.3 | 940.8 |
| MFR2 (g/10 min) after loop 2 (component (A)) | 6.4 | 5.2 | 4.7 | 5.8 | 7.1 | 5.1 | 5.8 | 7.0 | 6.2 | 7.0 | 5.5 |
| MFR2 (g/10 min) of loop 2 material (fraction (A-2)) | 6.3 | 4.0 | 4.3 | 5.7 | 6.7 | 4.2 | 6.6 | 7.4 | 6.3 | 9.3 | 4.4 |
| Density (kg/m3) of loop 2 material (fraction (A-2)) | 939.5 | 937.4 | 936.4 | 940.7 | 938.8 | 940.0 | 941.0 | 939.8 | 940.2 | 940.1 | 940.7 |
| C4 (wt%) after loop 2 material (Component (A)) | 1.46 | 1.57 | 1.48 | 1.37 | 1.42 | 1.28 | 1.13 | 1.60 | 1.33 | 1.54 | 1.21 |
| **GPR** | | | | | | | | | | | |
| Temp. (°C) | 75 | 75 | 75 | 75 | 75 | 75 | 75 | 75 | 75 | 75 | 75 |

| | | | | | | | | | | | |
|---|---|---|---|---|---|---|---|---|---|---|---|
| Press. (kPa) | 2000 | 2000 | 2000 | 2000 | 2000 | 2000 | 2000 | 2000 | 2000 | 2000 | 2000 |
| H2/C2 ratio (mol/kmol) | 0.7 | 1.2 | 0.7 | 1.3 | 1.0 | 1.0 | 1.0 | 1.0 | 0.8 | 0.8 | 1.3 |
| C6/C2 ratio (mol/kmol) | 7.9 | 7.2 | 6.1 | 12.6 | 8.8 | 6.2 | 9.7 | 9.8 | 13.2 | 12.6 | 13.1 |
| Split (wt%) | 55.4 | 61.1 | 60.8 | 60.6 | 57.7 | 56.3 | 55.0 | 61.2 | 61.6 | 61.7 | 54.6 |
| MFR2 (g/10 min) of GPR material (Component (B)) | 0.8 | 2.3 | 0.5 | 2.0 | 1.4 | 2.0 | 1.3 | 1.4 | 0.6 | 0.7 | 2.0 |
| Density (kg/m3) of GPR material (Component (B)) | 908 | 914 | 914 | 897 | 907 | 927 | 921 | 908 | 896 | 895 | 893 |
| C6 (wt%) of GPR material Component (B)) | 10.44 | 9.41 | 8.22 | 17.0 | 11.93 | 7.51 | 12.53 | 11.64 | 16.84 | 16.81 | 18.82 |

The polymers were mixed with 2400 ppm of Irganox B561. 270 ppm of Dynamar FX 5922 compounded and extruded under nitrogen atmosphere to pellets by using a JSW extruder at a melt temperature of ~ 200°C. Throughput rate was 220 kg/h.

**Table 2:** Material properties of inventive multimodal copolymer (P) and comparative copolymers, as well as film parameters

| **Material** | **CE1** | **CE2** | **CE3** | **CE4** | **CE5** | **CE6** | **CE7** | **CE8** | **IE1** | **IE2** | **IE3** |
|---|---|---|---|---|---|---|---|---|---|---|---|
| $MFR_2$ (g/10 min) | 0.8 | 2.3 | 0.5 | 2.0 | 1.3 | 1.9 | 1.3 | 1.4 | 0.6 | 0.6 | 2.0 |
| $MFR_{21}$ (g/10 min) | 24.4 | 58.3 | 15.7 | 51.2 | 34.2 | 45.7 | 34.0 | 40.0 | 19.0 | 19.4 | 52.8 |
| Fraction B, wt% | 55.4 | 61.1 | 60.8 | 60.6 | 57.7 | 56.3 | 55.0 | 61.2 | 61.6 | 61.7 | 54.6 |
| Density (kg/m$^3$) | 922 | 924 | 923 | 914 | 920 | 927 | 921 | 920 | 913 | 913 | 915 |
| C4 (wt%) | 0.65 | 0.61 | 0.58 | 0.54 | 0.60 | 0.56 | 0.51 | 0.62 | 0.51 | 0.59 | 0.55 |
| C6 (wt%) | 5.8 | 5.8 | 5.0 | 10.3 | 6.9 | 4.2 | 6.9 | 7.1 | 10.4 | 10.7 | 10.3 |
| C4 in A (wt%) | 1.5 | 1.6 | 1.5 | 1.4 | 1.4 | 1.3 | 1.1 | 1.6 | 1.3 | 1.5 | 1.2 |
| C6 in B (wt%) | 10.4 | 9.4 | 8.2 | 17.0 | 11.9 | 7.6 | 12.5 | 11.6 | 16.8 | 16.8 | 18.8 |
| C6 in B (wt%) should be for SIT ≤ 75 °C | 17.3 | 16.3 | 16.3 | 16.4 | 16.9 | 17.2 | 17.4 | 16.3 | 16.2 | 16.2 | 17.5 |
| check condition for SIT ≤ 75 °C | no | no | no | yes | no | no | no | no | yes | yes | yes |
| **Film Properties** | | | | | | | | | | | |
| SIT [°C] | 104 | 104 | 108 | 69 | 92 | 111 | 91 | 92 | 73 | 72 | 70 |
| DDI [g] | 775 | 206 | 995 | 840 | 830 | 158 | 452 | 770 | >1700 | >1700 | 1105 |
| Tensile Modulus MPa (MD) | 253 | 280 | 250 | 168 | 226 | 294 | 224 | 229 | 171 | 162 | 188 |

As can be seen from the above table SIT is below 75°C, in case that the 1-hexene content of the polymer component (B) produced in the GPR follows the equation (I)

$$C6\ [wt\%] \geq 27.725 - 0.1875 * B[wt\%]\ (I).$$

A bimodal copolymer (P) with a higher content of polymer component (B) made in the GPR can have a lower 1-hexene content in polymer component (B) and still has a low SIT.

The operation window (with respect to C6 content) is broader at higher amount of the component B. These two parameters, content of component B and C6 content in component B, are interdependent. The higher content of component B, the lower content of C6 in component B is required in order to have the same SIT.

From the above Table it can be further seen that the inventive copolymers (P) have the more balanced property profile, i.e. SIT ≤ 75°C, DDI ≥ 1100 g and TM (MD) of ≥ 150 MPa.

The above data was furthermore used for the proof of the power of the method.

In Figure 1 one can see the SIT values from the DoE - predicted vs measured values.

In Figure 2, which was made with the DoE, the C6 [wt%] content in Polymer Component B (material produced in GPR) vs GPR split for a material with SIT lower than 75°C is shown (upper part of the plot (2)). The lower part of the plot (1) is related to a polymer which has a SIT above 75°C.

It can be seen that materials having the same C6 content in Polymer Component (B) (material produced in GPR), e.g. 17.0 wt% (corresponding to GPR polymer density of about 894 $kg/m^3$), but different content of Polymer Component B (GPR split) - 55 % for the material 1 and 62% for the material 2, have different SIT: material 1 has SIT higher than 75°C and material 2 - lower than 75°C.

## Claims

1. A metallocene-catalysed multimodal polyethylene copolymer (P), which consists of

   (i) 35.0 to 50.0 wt% of an ethylene-1-butene polymer component (A), and
   (ii) 50.0 to 65.0 wt% of an ethylene-1-hexene polymer component (B),
   whereby the ethylene-1-butene polymer component (A) has a density in the range of from 937 to 943 kg/m3, an $MFR_2$, determined at 190°C, 2.16 kg, according to ISO 1133, in the range of from 3.5 to 8.5 g/10 min and a 1-butene content in the range of from 0.5 to 2.5 wt%, based on the ethylene-1-butene polymer component (A); and
   the ethylene polymer component (B) has
   a density in the range of from 885 to 900 kg/m3,
   an $MFR_2$, determined at 190°C, 2.16 kg, according to ISO 1133, in the range of from 0.05 to 1.5 g/10 min and a 1-hexene content (C6) in the range of from 15.5 to 22.0 wt%, based on the ethylene-1-hexene polymer compound (B), whereby the 1-hexene content follows the equation (I)

   $$30.13 - 0.1621*B[wt\%] \geq C6\ [wt\%] \geq 26.25 - 0.1621*B[wt\%] \quad (I);$$

   whereby the multimodal polyethylene copolymer (P) has a density in the range of from 908 to 918 kg/m3, an $MFR_2$, determined at 190°C, 2.16 kg, according to ISO 1133, in the range of from 0.2 to 2.6 g/10 min and a sealing initiation temperature (SIT), determined on a 40 μm test blown film as described in the experimental part, in the range of 60°C to ≤ 75°C.

2. The metallocene-catalysed multimodal polyethylene copolymer (P) according to claim 1, wherein ethylene polymer component (A) consists of an ethylene polymer fraction (A-1) and an ethylene polymer fraction (A-2), wherein the ethylene polymer fractions (A-1) and (A-2) have a density in the range of from 935 to 945 $kg/m^3$, preferably of 938 to 942 $kg/m^3$ and an $MFR_2$, determined at 190°C, 2.16 kg, according to ISO 1133, in the range of from 2.0 to 12.0 g/10 min, preferably of 3.0 to 11.0 g/10 min, more preferably of 3.5 to 10.5 g/10 min and even more preferably of 4.0 to 10.0 g/10 min, and
   wherein the $MFR_2$ and/or the density of the ethylene polymer fractions (A-1) and (A-2) may be the same or may be different from each other.

3. The metallocene-catalysed multimodal copolymer (P) according to claim 1 or 2, wherein the total amount of 1-butene, based on the multimodal polymer (P) is in the range of from 0.1 to 1.0 wt%, preferably 0.2 to 0.8 wt% and more preferably 0.3 to 0.7 wt%, the total amount of 1-hexene, based on the multimodal polymer (P) is in the range of from 8.0 to 15.0 wt%, preferably 8.5 to 14.0 wt% and more preferably 9.0 to 13.0 wt%, and wherein the amount of comonomer is determined as described in the experimental part.

4. The metallocene-catalysed multimodal copolymer (P) according to any of the preceding claims, wherein the total amount (wt%) of 1-butene, present in the ethylene polymer component (A), is in the range of 0.5 to 2.5 wt%, preferably of 0.7 to 2.0 wt%, more preferably of 1.0 to 1.6 wt%, based on the ethylene-1-butene polymer component (A), the total amount (wt%) of 1-hexene, present in the ethylene polymer component (B) is in the range of 15.5 to 22.0 wt%, preferably of 16.0 to 21.0 wt%, more preferably of 16.5 to 20.0 wt%, based on the ethylene-1-hexene polymer

component (B), and wherein the amount of comonomer is determined as described in the experimental part.

5. The metallocene-catalysed multimodal copolymer (P) according to any of the preceding claims, wherein the multimodal copolymer (P) is produced in the presence of metallocene complex of formula (I):

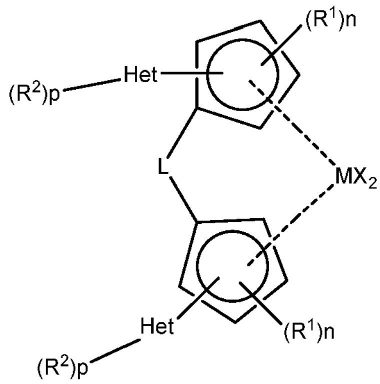

(I)

wherein each X is independently a halogen atom, a $C_{1-6}$-alkyl, $C_{1-6}$-alkoxy group, phenyl or benzyl group;
each Het is independently a monocyclic heteroaromatic group containing at least one heteroatom selected from O or S;
L is -R'$_2$Si-, wherein each R' is independently $C_{1-20}$-hydrocarbyl or $C_{1-10}$-alkyl substituted with alkoxy having 1 to 10 carbon atoms;
M is Ti, Zr or Hf;
each $R_1$ is the same or different and is a $C_{1-6}$-alkyl group or $C_{1-6}$-alkoxy group;
each n is 1 to 2;
each $R_2$ is the same or different and is a $C_{1-6}$-alkyl group, $C_{1-6}$-alkoxy group or -Si(R)$_3$ group;
each R is $C_{1-10}$-alkyl or phenyl group optionally substituted by 1 to 3 $C_{1-6}$-alkyl groups; and
each p is 0 to 1;
preferably in the presence of the complex dimethylsilanediylbis[2-(5-trimethylsilylfuran-2-yl)-4,5-dimethylcyclopentadien-1-yl] zirconium dichloride,
in at least one loop reactor and at least one gas phase reactor, preferably in a loop-loop-gas phase reactor cascade.

6. Method of predicting the sealing initiation temperature (SIT) of a metallocene-catalysed multimodal polyethylene copolymer (P) as defined in any of the preceding claim 1 to 5, produced in the presence of a metallocene complex of formula (I):

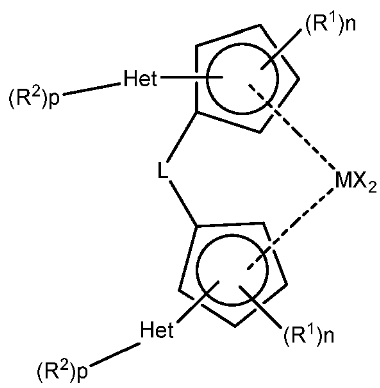

(I)

wherein each X is independently a halogen atom, a $C_{1-6}$-alkyl, $C_{1-6}$-alkoxy group, phenyl or benzyl group;
each Het is independently a monocyclic heteroaromatic containing at least one heteroatom selected from O or S;
L is -R'$_2$Si-, wherein each R' is independently $C_{1-20}$-hydrocarbyl or $C_{1-10}$-alkyl substituted with alkoxy having 1 to 10 carbon atoms;
M is Ti, Zr or Hf;

each $R^1$ is the same or different and is a $C_{1-6}$-alkyl group or $C_{1-6}$-alkoxy group;
each n is 1 to 2;
each $R^2$ is the same or different and is a $C_{1-6}$-alkyl group, $C_{1-6}$-alkoxy group or $-Si(R)_3$ group;
each R is $C_{1-10}$-alkyl or phenyl group optionally substituted by 1 to 3 $C_{1-6}$-alkyl groups; and
each p is 0 to 1;
preferably in the presence of the complex dimethylsilanediylbis[2-(5-trimethylsilylfuran-2-yl)-4,5-dimethylcyclopentadien-1-yl] zirconium dichloride,
in at least one loop reactor and at least one gas phase reactor, preferably in a loop-loop-gas phase reactor cascade,
the so produced multimodal polyethylene copolymer (P) consisting of

(i) 35.0 to 50.0 wt% of an ethylene-1-butene polymer component (A), and
(ii) 50.0 to 65.0 wt% of an ethylene-1-hexene polymer component (B),

whereby in a first step the ethylene-1-butene polymer component (A) having
a density in the range of from 937 to 943 kg/m$^3$,
an $MFR_2$, determined at 190°C, 2.16 kg, according to ISO 1133, in the range of from 3.5 to 8.5 g/10 min and
a 1-butene content in the range of from 0.5 to 2.5 wt%, based on the ethylene-1-butene polymer component (A),
is produced in at least one loop reactor, preferably in two subsequent loop reactors, and
whereby in a subsequent second step the ethylene polymer component (B) having
a density in the range of from 885 to 900 kg/m$^3$,
an $MFR_2$, determined at 190°C, 2.16 kg, according to ISO 1133, in the range of from 0.05 to 1.5 g/10 min and
a 1-hexene content (C6) in the range of from 15.5 to 22.0 wt%, based on the ethylene-1-hexene polymer compound (B),
is produced in a gas phase reactor (GPR),
whereby the multimodal polyethylene copolymer (P) has a density in the range of from 908 to 918 kg/m$^3$,
an $MFR_2$, determined at 190°C, 2.16 kg, according to ISO 1133, in the range of from 0.2 to 2.6 g/10 min and
whereby the sealing initiation temperature (SIT) for a 40 μm test blown film is predicted via equation (II)

$$SIT = 176.5 - 3.867*C6\ [wt\%;\ of\ (B)] - 0.627*B[wt\%]\ (II),$$

whereby $R^2$ of the method being ≥ 0.95 up to 1.0; $R^2$ being the goodness-of-fit measure for the method, and wherein the amount of comonomer is determined as described in the experimental part.

**7.** Method of predicting the dart drop impact strength (DDI) and/or for the tensile modulus in machine direction (TM(MD)) for a metallocene-catalysed multimodal polyethylene copolymer (P) as defined in any of the preceding claim 1 to 5, produced in the presence of a metallocene complex of formula (I), as defined in claim 5, in at least one loop reactor and at least one gas phase reactor, preferably in a loop-loop-gas phase reactor cascade,

whereby the dart drop impact strength (DDI, ASTM D1709, method A) for a 40 μm test blown film is predicted via equation (III)

$$DDI = -294.7 + 102.6*C6\ [wt\%,\ of\ (B)] - 1452.7*lg(MFR_2)\ (III),$$

wherein $MFR_2$ is the $MFR_2$ of the final multimodal polyethylene copolymer (P) and
$R^2$ of the method being ≥ 0.90 up to 1.0; and/or
whereby the tensile modulus in machine direction (TM(MD), ISO 527-3) for a 40 μm test blown film is predicted via equation (IV)

$$MD = 359 - 11*C6\ [wt\%,\ of\ (B)] + 47.7*lg(MFR_2),$$

wherein $MFR_2$ is the $MFR_2$ of the final multimodal polyethylene copolymer (P) and
$R^2$ of the method being ≥ 0.93 up to 1.0.

**8.** Use of a multimodal polyethylene copolymer (P) according to any of the preceding claim 1 to 5 for producing films,

preferably blown films.

9. Blown film comprising at least 50 wt%, more preferably at least 60 wt%, even more preferably at least 70 wt%, yet more preferably at least 80 wt%, of the metallocene catalysed multimodal copolymer (P) according to any of the preceding claim 1 to 5.

10. Blown film according to claim 9, **characterized by** a sealing initiation temperature determined as described in the experimental part on a test blown film with a thickness of 40 μm of in the range of 60°C to ≤ 75°C, preferably in the range of 65°C to 74°C, more preferably in the range of 68°C to 74°C.

11. Blown film according to claim 9 or 10, **characterized by** a dart-drop impact strength (DDI) determined according to ASTM D1709, method A on a 40 μm monolayer test blown film of at least 1100 g to more than 1700 g and/or a tensile modulus (in machine directions) measured on a 40 μm monolayer test blown film according to ISO 527-3, of ≥150MPa, preferably in the range of from >150MPa to 300 MPa, preferably of from >150MPa to 250 MPa.

12. Blown film according to any of the preceding claims 9 to 11, **characterized by** having

a) a sealing initiation temperature determined as described in the experimental part on a blown film with a thickness of 40 μm in the range of 60°C to 75°C, preferably in the range of 65°C to 74°C, more 68°C to 74°C, and
b) a dart-drop impact strength (DDI) determined according to ASTM D1709, method A on a 40 μm monolayer test blown film of at least 1100 g to more than 1700 g,
and
c) a tensile modulus (in machine direction) measured on a 40 μm monolayer test blown film according to ISO 527-3, of ≥150MPa, preferably in the range of from >150MPa to 300 MPa, preferably of from >150MPa to 250 MPa.

**Patentansprüche**

1. Metallocen-katalysiertes multimodales Polyethylen-Copolymer (P), bestehend aus

(i) 35,0 bis 50,0 Gew.-% einer Ethylen-1-Buten-Polymerkomponente (A), und
(ii) 50,0 bis 65,0 Gew.-% einer Ethylen-1-Hexen-Polymerkomponente (B),
wobei die Ethylen-1-Buten-Polymerkomponente (A) aufweist
eine Dichte im Bereich von 937 bis 943 kg/m$^3$,
einen $MFR_2$, bestimmt bei 190°C, 2,16 kg, nach ISO 1133, im Bereich von 3,5 bis 8,5 g/10 min und
einen 1-Buten-Gehalt im Bereich von 0,5 bis 2,5 Gew.-%, bezogen auf die Ethylen-1-Buten-Polymerkomponente (A); und
die Ethylenpolymerkomponente (B) aufweist
eine Dichte im Bereich von 885 bis 900 kg/m$^3$,
einen $MFR_2$, bestimmt bei 190°C, 2,16 kg, gemäß ISO 1133, im Bereich von 0,05 bis 1,5 g/10 min und
einen 1-Hexen-Gehalt (C6) im Bereich von 15,5 bis 22,0 Gew.-%, bezogen auf die Ethylen-1-Hexen-Polymerverbindung (B), wobei der 1-Hexen-Gehalt die Gleichung (I) erfüllt

$$30{,}13 - 0{,}1621*B[wt\%] \geq C6\ [wt\%] \geq 26{,}25 - 0{,}1621*B[wt\%]\ (I);$$

wobei das multimodale Polyethylen-Copolymer (P) aufweist
eine Dichte im Bereich von 908 bis 918 kg/m$^3$,
einen $MFR_2$, bestimmt bei 190°C, 2,16 kg, gemäß ISO 1133, im Bereich von 0,2 bis 2,6 g/10 min und
eine Versiegelungsstarttemperatur (SIT), bestimmt an einer 40 μm Testblasfolie wie im experimentellen Teil beschrieben, im Bereich von 60°C bis ≤ 75°C.

2. Metallocen-katalysiertes multimodales Polyethylen-Copolymer (P) nach Anspruch 1, wobei die Ethylen-Polymerkomponente (A) aus einer Ethylen-Polymerfraktion (A-1) und einer Ethylen-Polymerfraktion (A-2) besteht,

wobei die Ethylen-Polymerfraktionen (A-1) und (A-2) eine Dichte im Bereich von 935 bis 945 kg/m$^3$, bevorzugt

von 938 bis 942 kg/m$^3$ aufweisen und
einen $MFR_2$, bestimmt bei 190°C, 2,16 kg, gemäß ISO 1133, im Bereich von 2,0 bis 12,0 g/10 min, bevorzugt von 3,0 bis 11,0 g/10 min, stärker bevorzugt von 3,5 bis 10,5 g/10 min und noch stärker bevorzugt von 4,0 bis 10,0 g/10 min, und
wobei der $MFR_2$ und/oder die Dichte der Ethylen-Polymerfraktionen (A-1) und (A-2) gleich oder verschieden voneinander sein können.

**3.** Metallocen-katalysiertes multimodales Copolymer (P) nach Anspruch 1 oder 2, wobei die Gesamtmenge an 1-Buten, bezogen auf das multimodale Polymer (P), im Bereich von 0,1 bis 1,0 Gew.-%, bevorzugt 0,2 bis 0,8 Gew.-% und stärker bevorzugt 0,3 bis 0,7 Gew.-% liegt,
die Gesamtmenge an 1-Hexen, bezogen auf das multimodale Polymer (P), im Bereich von 8,0 bis 15,0 Gew.-%, bevorzugt 8,5 bis 14,0 Gew.-% und stärker bevorzugt 9,0 bis 13,0 Gew.-% liegt, und wobei die Menge an Comonomer wie im experimentellen Teil beschrieben bestimmt wird.

**4.** Metallocen-katalysiertes multimodales Copolymer (P) nach einem der vorhergehenden Ansprüche, wobei die Gesamtmenge (Gew.-%) an 1-Buten, die in der Ethylen-Polymerkomponente (A) vorhanden ist, im Bereich von 0,5 bis 2,5 Gew.-%, bevorzugt von 0,7 bis 2,0 Gew.-%, stärker bevorzugt von 1,0 bis 1,6 Gew.-%, bezogen auf die Ethylen-1-Buten-Polymerkomponente (A), liegt,
die Gesamtmenge (Gew.-%) an 1-Hexen, die in der Ethylenpolymerkomponente (B) vorhanden ist, im Bereich von 15,5 bis 22,0 Gew.-%, bevorzugt von 16,0 bis 21,0 Gew.-%, stärker bevorzugt von 16,5 bis 20,0 Gew.-%, bezogen auf die Ethylen-1-Hexen-Polymerkomponente (B), liegt, und wobei die Menge des Comonomers wie im experimentellen Teil beschrieben bestimmt wird.

**5.** Metallocen-katalysiertes multimodales Copolymer (P) nach einem der vorhergehenden Ansprüche, wobei das multimodale Copolymer (P) in Gegenwart eines Metallocen-Komplexes der Formel (I) hergestellt wird:

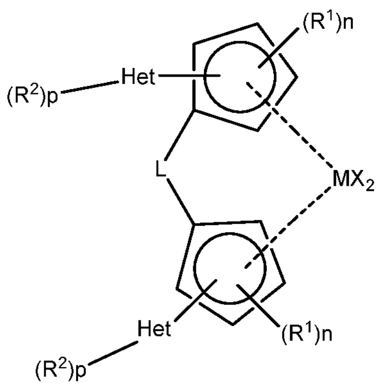

(I)

wobei jedes X unabhängig ein Halogenatom, eine $C_{1-6}$-Alkyl-, $C_{1-6}$-Alkoxygruppe, Phenyl- oder Benzylgruppe ist;
jedes Het unabhängig eine monocyclische heteroaromatische Gruppe ist, die mindestens ein Heteroatom, ausgewählt aus O oder S, enthält;
L -R'$_2$Si- ist, wobei jedes R' unabhängig $C_{1-20}$-Kohlenwasserstoff oder $C_{1-10}$-Alkyl substituiert mit Alkoxy mit 1 bis 10 Kohlenstoffatomen ist;
M Ti, Zr oder Hf ist;
jedes $R_1$ gleich oder unterschiedlich ist und eine $C_{1-6}$-Alkylgruppe oder $C_{1-6}$-Alkoxygruppe ist;
jedes n 1 bis 2 ist;
jedes $R_2$ gleich oder unterschiedlich ist und eine $C_{1-6}$-Alkylgruppe, $C_{1-6}$-Alkoxygruppe oder $Si(R)_3$-Gruppe ist;
jedes R eine $C_{1-10}$-Alkyl- oder Phenylgruppe ist, optional substituiert mit 1 bis 3 $C_{1-6}$-Alkylgruppen; und
jedes p 0 bis 1 ist;
bevorzugt in Gegenwart des Komplexes Dimethylsilandiylbis[2-(5-trimethylsilylfuran-2-yl)-4,5-dimethylcyclopentadien-1-yl] zirconiumdichlorid,
in mindestens einem Loopreaktor und mindestens einem Gasphasenreaktor, bevorzugt in einer Loop-Loop-Gasphasenreaktor-Kaskade.

**6.** Verfahren zur Vorhersage der Versiegelungsstarttemperatur (SIT) eines Metallocen-katalysierten multimodalen Polyethylencopolymers (P) nach einem der vorhergehenden Ansprüche 1 bis 5, hergestellt in Gegenwart eines

Metallocen-Komplexes der Formel (I):

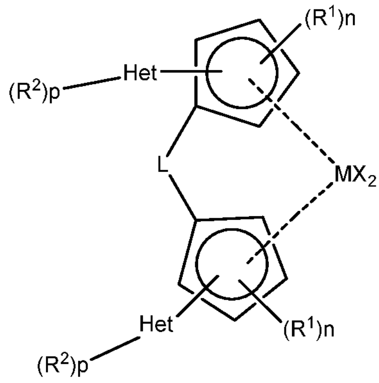

(I)

wobei jedes X unabhängig ein Halogenatom, eine $C_{1-6}$-Alkyl-, $C_{1-6}$-Alkoxygruppe, Phenyl- oder Benzylgruppe ist; jedes Het unabhängig eine monocyclische heteroaromatische Gruppe ist, die mindestens ein Heteroatom, ausgewählt aus O oder S, enthält;
L -$R'_2$Si- ist, wobei jedes R' unabhängig $C_{1-20}$-Kohlenwasserstoff oder $C_{1-10}$-Alkyl substituiert mit Alkoxy mit 1 bis 10 Kohlenstoffatomen ist;
M Ti, Zr oder Hf ist;
jedes $R_1$ gleich oder unterschiedlich ist und eine $C_{1-6}$-Alkylgruppe oder $C_{1-6}$-Alkoxygruppe ist;
jedes n 1 bis 2 ist;
jedes $R_2$ gleich oder unterschiedlich ist und eine $C_{1-6}$-Alkylgruppe, $C_{1-6}$-Alkoxygruppe oder $Si(R)_3$-Gruppe ist;
jedes R eine $C_{1-10}$-Alkyl- oder Phenylgruppe ist, optional substituiert mit 1 bis 3 $C_{1-6}$-Alkylgruppen; und
jedes p 0 bis 1 ist;
bevorzugt in Gegenwart des Komplexes Dimethylsilandiylbis[2-(5-trimethylsilylfuran-2-yl)-4,5-dimethylcyclopentadien-1-yl] zirconiumdichlorid,
in mindestens einem Loopreaktor und mindestens einem Gasphasenreaktor, bevorzugt in einer Loop-Loop-Gasphasenreaktor-Kaskade,
wobei das so hergestellte multimodale Polyethylen-Copolymer (P) besteht aus

(i) 35,0 bis 50,0 Gew.-% einer Ethylen-1-Buten-Polymerkomponente (A), und
(ii) 50,0 bis 65,0 Gew.-% einer Ethylen-1-Hexen-Polymerkomponente (B),

wobei in einem ersten Schritt die Ethylen-1-Buten-Polymerkomponente (A) mit einer Dichte im Bereich von 937 bis 943 kg/$m^3$,
einem $MFR_2$, bestimmt bei 190°C, 2,16 kg, nach ISO 1133, im Bereich von 3,5 bis 8,5 g/10 min und
einem 1-Buten-Gehalt im Bereich von 0,5 bis 2,5 Gew.-%, bezogen auf die Ethylen-1-Buten-Polymerkomponente (A),
in mindestens einem Loopreaktor, bevorzugt in zwei aufeinanderfolgenden Loopreaktoren, hergestellt wird, und
wobei in einem anschließenden zweiten Schritt die Ethylen-Polymerkomponente (B) mit
einer Dichte im Bereich von 885 bis 900 kg/$m^3$,
einem $MFR_2$, bestimmt bei 190°C, 2,16 kg, nach ISO 1133, im Bereich von 0,05 bis 1,5 g/10 min und
einem 1-Hexen-Gehalt (C6) im Bereich von 15,5 bis 22,0 Gew.-%, bezogen auf die Ethylen-1-Hexen-Polymerverbindung (B),
in einem Gasphasenreaktor (GPR) hergestellt wird,
wobei das multimodale Polyethylen-Copolymer (P) aufweist
eine Dichte im Bereich von 908 bis 918 kg/$m^3$,
einen $MFR_2$, bestimmt bei 190°C, 2,16 kg, gemäß ISO 1133, im Bereich von 0,2 bis 2,6 g/10 min und
wobei die Versiegelungsstarttemperatur (SIT) für eine 40 μm Testblasfolie mittels Gleichung (II) vorhergesagt wird

$$SIT = 176{,}5 - 3{,}867*C6\ [Gew.\text{-}\%;\ von\ (B)] - 0{,}627*B[Gew.\text{-}\%]\quad (II),$$

wobei $R^2$ des Verfahrens ≥ 0,95 bis zu 1,0 ist; $R^2$ das Anpassungsmaß für das Verfahren ist, und wobei die

Menge des Comonomers wie im experimentellen Teil beschrieben bestimmt wird.

**7.** Verfahren zur Vorhersage der Dart-Drop-Schlagzähigkeit (DDI) und/oder des Zugmoduls in Maschinenrichtung (TM(MD)) für ein Metallocen-katalysiertes multimodales Polyethylen-Copolymer (P) nach einem der vorhergehenden Ansprüche 1 bis 5, das in Gegenwart eines Metallocen-Komplexes der Formel (I) nach Anspruch 5 in mindestens einem Loopreaktor und mindestens einem Gasphasenreaktor, bevorzugt in einer Loop-Loop-Gasphasenreaktorkaskade, hergestellt wird,

wobei die Dart-Drop-Schlagzähigkeit (DDI, ASTM D1709, Methode A) für eine 40 μm Testblasfolie mittels Gleichung (III) vorhergesagt wird

$$DDI = -294{,}7 + 102{,}6 * C6\ [\text{Gew.-\%, von (B)}] - 1452{,}7 * \lg(MFR_2)\ \text{(III)},$$

wobei $MFR_2$ der $MFR_2$ des fertigen multimodalen Polyethylen-Copolymers (P) ist und
$R^2$ des Verfahrens $\geq$ 0,90 bis zu 1,0 ist; und/oder
wobei der Zugmodul in Maschinenrichtung (TM(MD), ISO 527-3) für eine 40 μm Testblasfolie mittels Gleichung (IV) vorhergesagt wird

$$MD = 359 - 11 * C6\ [\text{Gew.-\%, von (B)}] + 47{,}7 * \lg(MFR_2),$$

wobei $MFR_2$ der $MFR_2$ des fertigen multimodalen Polyethylen-Copolymers (P) ist und
$R^2$ des Verfahrens $\geq$ 0,93 bis 1,0 ist.

**8.** Verwendung eines multimodalen Polyethylen-Copolymers (P) nach einem der vorhergehenden Ansprüche 1 bis 5 zur Herstellung von Folien, bevorzugt Blasfolien.

**9.** Blasfolie, die mindestens 50 Gew.-%, stärker bevorzugt mindestens 60 Gew.-%, noch stärker bevorzugt mindestens 70 Gew.-% und noch stärker bevorzugt mindestens 80 Gew.-% des Metallocen-katalysierten multimodalen Copolymers (P) nach einem der vorangehenden Ansprüche 1 bis 5 enthält.

**10.** Blasfolie nach Anspruch 9, **gekennzeichnet durch** eine Versiegelungsstarttemperatur, bestimmt wie beschrieben im experimentellen Teil an einer Test-Blasfolie mit einer Dicke von 40 μm, im Bereich von 60°C bis ≤ 75°C, bevorzugt im Bereich von 65°C bis 74°C, stärker bevorzugt im Bereich von 68°C bis 74°C.

**11.** Blasfolie nach Anspruch 9 oder 10, **gekennzeichnet durch** eine Dart-Drop-Schlagzähigkeit (DDI), bestimmt nach ASTM D1709, Verfahren A, an einer 40 μm einschichtigen Testblasfolie, von mindestens 1100 g bis mehr als 1700 g und/oder einen Zugmodul (in Maschinenrichtung), gemessen an einer 40 μm einschichtigen Testblasfolie nach ISO 527-3, von ≥150 MPa, bevorzugt im Bereich von > 150 MPa bis 300 MPa, bevorzugt von > 150 MPa bis 250 MPa.

**12.** Blasfolie nach einem der vorangehenden Ansprüche 9 bis 11, **gekennzeichnet durch** aufweisen

a) einer Versiegelungsstarttemperatur, bestimmt wie beschrieben im experimentellen Teil an einer Test-Blasfolie mit einer Dicke von 40 μm, im Bereich von 60°C bis 75°C, bevorzugt im Bereich von 65°C bis 74°C, mehr von 68°C bis 74°C, aufweist
und
b) einer Dart-Drop-Schlagzähigkeit (DDI), bestimmt nach ASTM D1709, Methode A, an einer 40 μm einschichtigen Testblasfolie von mindestens 1100 g bis mehr als 1700 g,
und
c) eines Zugmoduls (in Maschinenrichtung), gemessen an einer 40 μm einschichtigen Testblasfolie gemäß ISO 527-3, von ≥150 MPa, bevorzugt im Bereich von > 150 MPa bis 300 MPa, bevorzugt von > 150 MPa bis 250 MPa.

## Revendications

**1.** Copolymère de polyéthylène multimodal (P) catalysé par un métallocène, constitué de

(i) 35,0 à 50,0 % en poids d'un composant polymère d'éthylène-1-butène (A), et
(ii) 50,0 à 65,0 % en poids d'un composant polymère d'éthylène-1-hexène (B),
le composant polymère d'éthylène-1-butène (A) ayant
une densité dans la plage de 937 à 943 kg/$m^3$,
un $MFR_2$, déterminée à 190°C, 2,16 kg, selon ISO 1133, dans la plage de 3,5 à 8,5 g/10 min et
une teneur en 1-butène dans la plage de 0,5 à 2,5 % en poids, par rapport au composant polymère d'éthylène-1-butène (A); et
le composant polymère d'éthylène (B) ayant
une densité dans la plage de 885 à 900 kg/$m^3$,
un $MFR_2$, déterminée à 190°C, 2,16 kg, selon ISO 1133, dans la plage de 0,05 à 1,5 g/10 min et
une teneur en 1-hexène (C6) dans la plage de 15,5 à 22,0 % en poids par rapport au composé polymère d'éthylène-1-hexène (B), la teneur en 1-hexène suivant l'équation (I)

$$30{,}13 - 0{,}1621*B[\%\text{ en poids}] \geq C6\ [\%\text{ en poids}] \geq 26{,}25 - 0{,}1621*B[\%\text{ en poids}]\ (I)\ ;$$

le copolymère de polyéthylène multimodal (P) ayant
une densité dans la plage de 908 à 918 kg/$m^3$,
un $MFR_2$, déterminée à 190°C, 2,16 kg, selon ISO 1133, dans la plage de 0,2 à 2,6 g/10 min et
une température d'initiation du scellage (SIT) déterminée sur un film soufflé d'essai de 40 $\mu$m comme décrit dans la partie expérimentale, dans la plage de 60°C à ≤ 75°C.

**2.** Copolymère de polyéthylène multimodal (P) catalysé par un métallocène selon la revendication 1, dans lequel le composant polymère d'éthylène (A) est constitué d'une fraction de polymère d'éthylène (A-1) et d'une fraction de polymère d'éthylène (A-2),

dans lequel les fractions de polymère d'éthylène (A-1) et (A-2) ont une densité dans la plage de 935 à 945 kg/$m^3$, préférentiellement de 938 à 942 kg/$m^3$ et
un $MFR_2$, déterminé à 190°C, 2,16 kg, selon ISO 1133, dans la plage de 2,0 à 12,0 g/10 min, préférentiellement de 3,0 á 11,0 g/10 min, plus préférentiellement de 3,5 á 10,5 g/10 min et encore plus préférentiellement de 4,0 á 10,0 g/10 min, et
dans lequel le $MFR_2$ et/ou la densité des fractions de polymère d'éthylène (A-1) et (A-2) peuvent être identiques ou différents l'un de l'autre.

**3.** Copolymère multimodal (P) catalysé par un métallocène selon la revendication 1 ou 2, dans lequel la quantité totale de 1-butène, par rapport au polymère multimodal (P), est dans la plage de 0,1 à 1,0 % en poids, préférentiellement de 0,2 à 0,8 % en poids et plus préférentiellement de 0,3 à 0,7 % en poids,
la quantité totale de 1-hexène, par rapport au polymère multimodal (P), est dans la plage de 8,0 à 15,0 % en poids, préférentiellement de 8,5 à 14,0 % en poids et plus préférentiellement de 9,0 à 13,0 % en poids, et la quantité de comonomère étant déterminée comme décrit dans la partie expérimentale.

**4.** Copolymère multimodal (P) catalysé par un métallocène selon l'une quelconque des revendications précédentes, dans lequel la quantité totale (% en poids) de 1-butène présente dans le composant polymère d'éthylène (A) est dans la plage de 0,5 à 2,5 % en poids, préférentiellement de 0,7 à 2,0 % en poids, plus préférentiellement de 1,0 à 1,6 % en poids, par rapport au composant polymère d'éthylène-1-butène (A),
la quantité totale (% en poids) de 1-hexène présente dans le composant polymère d'éthylène (B) est dans la plage de 15,5 à 22,0 % en poids, préférentiellement de 16,0 à 21,0 % en poids, plus préférentiellement de 16,5 à 20,0 % en poids, par rapport au composant polymère d'éthylène-1-hexène (B), et la quantité de comonomère étant déterminée comme décrit dans la partie expérimentale.

**5.** Copolymère multimodal (P) catalysé par un métallocène selon l'une quelconque des revendications précédentes, dans lequel le copolymère multimodal (P) est produit en présence d'un complexe de métallocène de formule (I) :

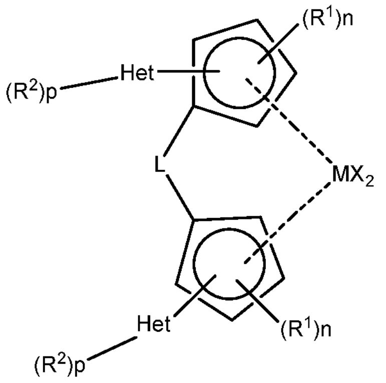

(I)

dans lequel chaque X est indépendamment un atome d'halogène, un groupe $C_{1-6}$-alkyle, un groupe $C_{1-6}$-alkoxy, un groupe phényle ou benzyle ;

chaque Het est indépendamment un groupe hétéroaromatique monocyclique contenant au moins un hétéroatome choisi parmi O ou S ;

L est -$R'_2$Si-, chaque R' étant indépendamment $C_{1-20}$-hydrocarbyle ou $C_{1-10}$-alkyle substitué par un alcoxy ayant de 1 à 10 atomes de carbone ;

M est Ti, Zr ou Hf ;

chaque $R_1$ est identique ou différent et est un groupe $C_{1-6}$-alkyle ou un groupe $C_{1-6}$-alcoxy ;

chaque n est de 1 à 2 ;

chaque $R_2$ est identique ou différent et est un groupe $C_{1-6}$-alkyle, un groupe $C_{1-6}$-alcoxy ou un groupe -$Si(R)_3$ ;

chaque R est un groupe $C_{1-10}$-alkyle ou phényle éventuellement substitué par 1 à 3 groupes $C_{1-6}$-alkyle ; et

chaque p est de 0 à 1 ;

préférentiellement en présence du complexe diméthylsilanediylbis[2-(5-triméthylsilylfuran-2-yl)-4,5-diméthylcyclopentadiène-1-yl] dichlorure de zirconium,

dans au moins un réacteur en boucle et au moins un réacteur en phase gazeuse, préférentiellement dans une cascade de réacteurs en boucle-boucle en phase gazeuse.

**6.** Procédé de prédiction de la température d'initiation du scellage (SIT) d'un copolymère de polyéthylène multimodal (P) catalysé par un métallocène tel que défini dans l'une quelconque des revendications précédentes 1 à 5, produit en présence d'un complexe métallocène de formule (I) :

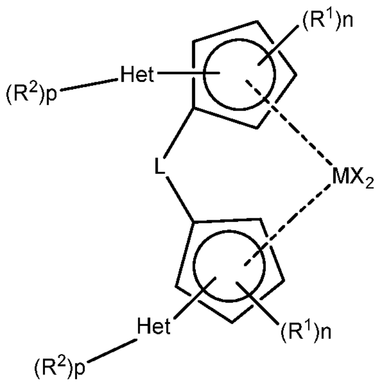

(I)

dans lequel chaque X est indépendamment un atome d'halogène, un groupe $C_{1-6}$-alkyle, un groupe $C_{1-6}$-alkoxy, un groupe phényle ou benzyle ;

chaque Het est indépendamment un hétéroaromatique monocyclique contenant au moins un hétéroatome choisi parmi O ou S ;

L est -$R'_2$Si-, chaque R' étant indépendamment $C_{1-20}$-hydrocarbyle ou $C_{1-10}$-alkyle substitué par un alcoxy ayant de 1 à 10 atomes de carbone ;

M est Ti, Zr ou Hf ;

chaque $R^1$ est identique ou différent et est un groupe $C_{1-6}$-alkyle ou un groupe $C_{1-6}$-alcoxy ;

chaque n est de 1 à 2 ;

chaque $R^2$ est identique ou différent et est un groupe $C_{1-6}$-alkyle, un groupe $C_{1-6}$-alcoxy ou un groupe -Si(R)$_3$ ; chaque R est un groupe $C_{1-10}$-alkyle ou phényle éventuellement substitué par 1 à 3 groupes $C_{1-6}$-alkyle ; et chaque p est de 0 à 1 ;
préférentiellement en présence du complexe diméthylsilanediylbis[2-(5-triméthylsilylfuran-2-yl)-4,5-diméthylcyclopentadiène-1-yl] dichlorure de zirconium,
dans au moins un réacteur en boucle et au moins un réacteur en phase gazeuse, préférentiellement dans une cascade de réacteurs en boucle-boucle en phase gazeuse,
le copolymère de polyéthylène multimodal (P) ainsi produit étant constitué de

(i) 35,0 à 50,0 % en poids d'un composant polymère d'éthylène-1-butène (A), et
(ii) 50,0 à 65,0 % en poids d'un composant polymère d'éthylène-1-hexène (B),

dans lequel, dans une première étape, le composant polymère d'éthylène-1-butène (A) ayant
une densité dans la plage de 937 à 943 kg/m$^3$,
un $MFR_2$, déterminée à 190°C, 2,16 kg, selon ISO 1133, dans la plage de 3,5 à 8,5 g/10 min et
une teneur en 1-butène dans la plage de 0,5 à 2,5 % en poids par rapport au composant polymère d'éthylène-1-butène (A),
est produit dans au moins un réacteur en boucle, préférentiellement dans deux réacteurs en boucle successifs, et dans lequel, dans une deuxième étape, le composant polymère d'éthylène (B) ayant
une densité dans la plage de 885 à 900 kg/m$^3$,
un $MFR_2$, déterminée à 190°C, 2,16 kg, selon ISO 1133, dans la plage de 0,05 à 1,5 g/10 min et
une teneur en 1-hexène (C6) dans la plage de 15,5 à 22,0 % en poids par rapport au composé polymère d'éthylène-1-hexène (B),
est produit dans un réacteur en phase gazeuse (GPR),
dans lequel le copolymère de polyéthylène multimodal (P) a une densité dans la plage de 908 à 918 kg/m$^3$,
un $MFR_2$, déterminée à 190°C, 2,16 kg, selon ISO 1133, dans la plage de 0,2 à 2,6 g/10 min et
dans lequel la température d'initiation du scellage (SIT) pour un film soufflé d'essai de 40 μm est prédite par l'équation (II)

$$SIT = 176,5 - 3,867*C6\ [\%\ en\ poids\ ;\ de\ (B)] - 0,627*B\ [\%\ en\ poids]\ (II),$$

dans lequel $R^2$ du procédé est ≥ 0,95 jusqu'à 1,0 ; $R^2$ étant la mesure de qualité de l'ajustement du procédé, et la quantité de comonomère étant déterminée comme décrit dans la partie expérimentale.

**7.** Procédé de prédiction de la résistance à testeur d'impact falling dart (DDI) et/ou du module de traction dans la direction machine (TM(MD)) pour un copolymère de polyéthylène multimodal (P) catalysé par un métallocène tel que défini dans l'une quelconque des revendications précédentes 1 à 5, produit en présence d'un complexe métallocène de formule (I), tel que défini dans la revendication 5, dans au moins un réacteur en boucle et au moins un réacteur en phase gazeuse, préférentiellement dans une cascade de réacteurs en boucle-boucle en phase gazeuse,

dans lequel la résistance à testeur d'impact falling dart (DDI, ASTM D1709, méthode A) pour un film soufflé d'essai de 40 μm est prédite par l'équation (III)

$$DDI = -294,7 + 102,6*C6\ [\%\ en\ poids,\ de\ (B)] - 1452,7*lg(MFR_2)\ (III),$$

dans lequel le $MFR_2$ est le $MFR_2$ du copolymère de polyéthylène multimodal (P) final et
$R^2$ du procédé étant ≥ 0,90 jusqu'à 1,0 ; et/ou
dans lequel le module de traction dans la direction machine (TM(MD), ISO 527-3) pour un film soufflé d'essai de 40 μm est prédit par l'équation (IV)

$$MD = 359 - 11*C6\ [\%\ en\ poids,\ de\ (B)] + 47,7*lg(MFR_2),$$

dans lequel le $MFR_2$ est le $MFR_2$ du copolymère de polyéthylène multimodal (P) final et
$R^2$ du procédé étant ≥ 0,93 jusqu'à 1,0.

**8.** Utilisation d'un copolymère de polyéthylène multimodal (P) selon l'une quelconque des revendications précédentes 1 à 5 pour la production de films, préférentiellement de films soufflés.

**9.** Film soufflé comprenant au moins 50 % en poids, plus préférentiellement au moins 60 % en poids, encore plus préférentiellement au moins 70 % en poids, même encore plus préférentiellement au moins 80 % en poids, du copolymère multimodal (P) catalysé par un métallocène selon l'une quelconque des revendications précédentes 1 à 5.

**10.** Film soufflé selon la revendication 9, **caractérisé par** une température d'initiation du scellage déterminée comme décrit dans la partie expérimentale sur un film soufflé d'essai d'une épaisseur de 40 μm dans la plage de 60°C à ≤ 75°C, préférentiellement dans la plage de 65°C à 74°C, plus préférentiellement dans la plage de 68°C à 74°C.

**11.** Film soufflé selon la revendication 9 ou 10, **caractérisé par** une résistance à testeur d'impact falling dart (DDI) déterminée selon ASTM D1709, méthode A, sur un film soufflé d'essai monocouche de 40 μm d'au moins 1100 g à plus de 1700 g et/ou un module de traction (dans la direction machine) mesuré sur un film soufflé d'essai monocouche de 40 μm selon ISO 527-3, de ≥150MPa, préférentiellement dans la plage de >150MPa à 300 MPa, préférentiellement de >150MPa à 250 MPa.

**12.** Film soufflé selon l'une quelconque des revendications précédentes 9 à 11, **caractérisé en ce qu'**il présente

a) une température d'initiation du scellage déterminée comme décrit dans la partie expérimentale sur un film soufflé d'une épaisseur de 40 μm dans la plage de 60°C à 75°C, préférentiellement dans la plage de 65°C à 74°C, davantage 68°C à 74°C,
et
b) une résistance à testeur d'impact falling dart (DDI) déterminée selon ASTM D1709, méthode A, sur un film soufflé d'essai monocouche de 40 μm d'au moins 1100 g à plus de 1700 g,
et
c) un module de traction (dans la direction machine) mesuré sur un film soufflé d'essai monocouche de 40 μm selon ISO 527-3, de ≥150MPa, préférentiellement dans la plage de >150MPa à 300 MPa, préférentiellement de >150MPa à 250 MPa.

**Figure 1** SIT from DoE – predicted vs measured

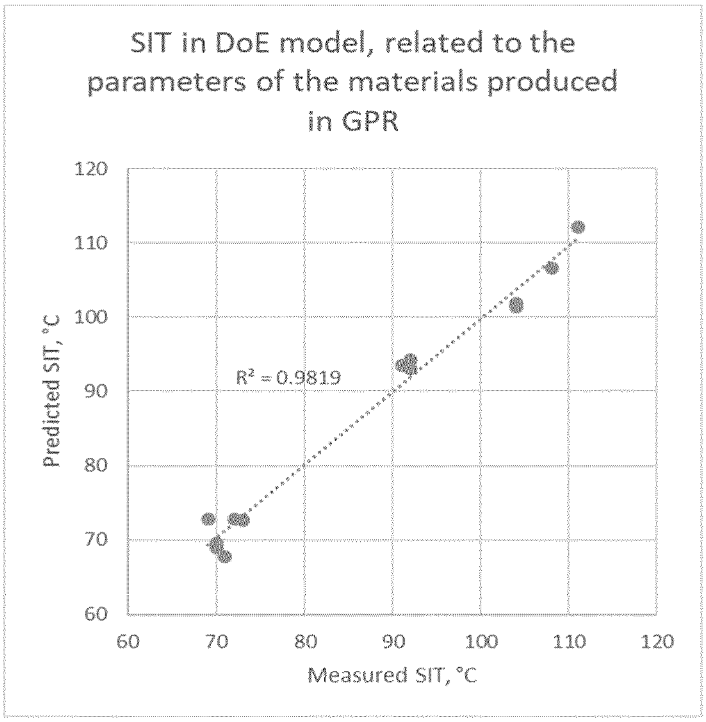


**Figure 2:** C6 wt% content in Polymer Component B (material produced in GPR) vs GPR split for the materials with SIT lower than 75°C

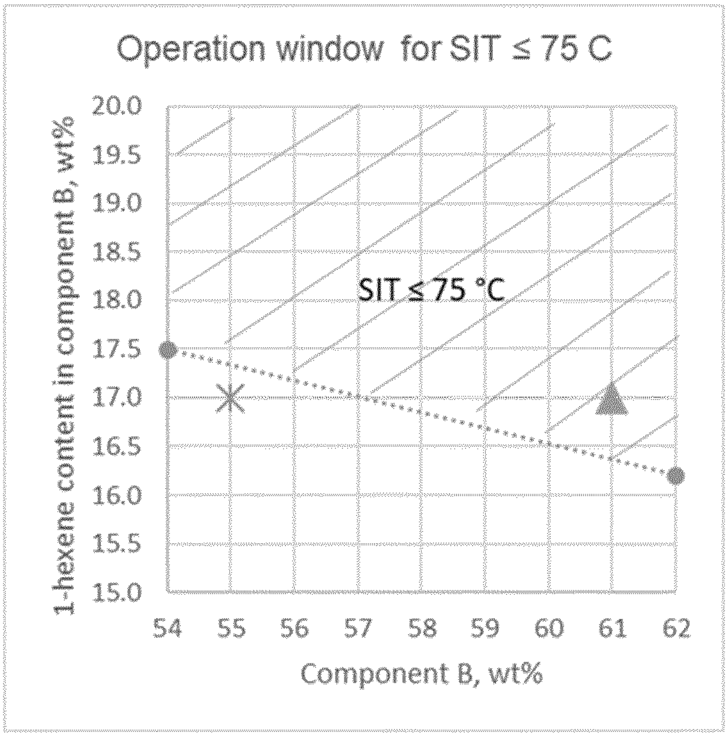

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2021009189 A
- WO 2021009190 A
- WO 2021009191 A
- WO 2021009192 A
- WO 2021013552 A1
- WO 2021191018 A1
- WO 2016083208 A1
- US 2014194277 A1
- WO 2016198273 A


### Non-patent literature cited in the description


- **KLIMKE, K. ; PARKINSON, M. ; PIEL, C. ; KAMINSKY, W. ; SPIESS, H.W. ; WILHELM, M.** *Macromol. Chem. Phys.,* 2006, vol. 207, 382
- **PARKINSON, M. ; KLIMKE, K. ; SPIESS, H.W. ; WILHELM, M.** *Macromol. Chem. Phys.,* 2007, vol. 208, 2128
- **POLLARD, M. ; KLIMKE, K. ; GRAF, R. ; SPIESS, H.W. ; WILHELM, M. ; SPERBER, O. ; PIEL, C ; KAMINSKY, W.** *Macromolecules,* 2004, vol. 37, 813
- **FILIP, X. ; TRIPON, C. ; FILIP, C.** *J. Mag. Resn.,* 2005, vol. 176, 239
- **GRIFFIN, J.M. ; TRIPON, C. ; SAMOSON, A. ; FILIP, C. ; BROWN, S.P.** *Mag. Res. in Chem.,* 2007, vol. 45, S1, , S198
- **CASTIGNOLLES, P. ; GRAF, R. ; PARKINSON, M. ; WILHELM, M. ; GABORIEAU, M.** *Polymer,* 2009, vol. 50, 2373
- **BUSICO, V. ; CIPULLO, R.** *Prog. Polym. Sci.,* 2001, vol. 26, 443
- **BUSICO, V. ; CIPULLO, R ; MONACO, G. ; VACATELLO, M. ; SEGRE, A.L.** *Macromoleucles,* 1997, vol. 30, 6251
- **ZHOU, Z. ; KUEMMERLE, R ; QIU, X. ; REDWINE, D. ; CONG, R. ; TAHA, A. ; BAUGH, D. ; WINNIFORD, B.** *J. Mag. Reson.,* 2007, vol. 187, 225
- **BUSICO, V. ; CARBONNIERE, P. ; CIPULLO, R. ; PELLECCHIA, R. ; SEVERN, J. ; TALARICO, G.** *Macromol. Rapid Commun.,* 2007, vol. 28, 1128
- **RESCONI, L. ; CAVALLO, L. ; FAIT, A. ; PIEMONTESI, F.** *Chem. Rev.,* 2000, vol. 100, 1253